# EUROPÄISCHE PATENTSCHRIFT

(11) **EP 3 420 390 B1**
(45) Veröffentlichungstag und Bekanntmachung des Hinweises auf die Patenterteilung: **02.04.2025**
(21) Anmeldenummer: 17710139.1
(22) Anmeldetag: 21.02.2017
(51) Int. Cl.: G02B 6/42, G02B 6/122, G02F 1/01, G02B 6/13, G02B 6/12

(54) **SCHALTKREISANORDNUNG UND VERFAHREN ZUM HERSTELLEN EINER SCHALTKREISANORDNUNG**
CIRCUIT ASSEMBLY AND METHOD FOR PRODUCING A CIRCUIT ASSEMBLY
ENSEMBLE CIRCUIT DE COMMUTATION ET PROCÉDÉ DE FABRICATION D'UN ENSEMBLE CIRCUIT DE COMMUTATION

(30) Priorität: 23.02.2016 DE 102016202765
(43) Veröffentlichungstag der Anmeldung: 02.01.2019
(73) Patentinhaber: Fraunhofer-Gesellschaft zur Förderung der angewandten Forschung e.V., 80686 München (DE)
(72) Erfinder: KLEINERT, Moritz, 13187 Berlin (DE); SCHELL, Martin, 10437 Berlin (DE)
(74) Vertreter: Maikowski & Ninnemann Patentanwälte Partnerschaft mbB
(86) Internationale Anmeldenummer: PCT/EP2017/053930
(87) Internationale Veröffentlichungsnummer: WO 2017/144462

(56) Entgegenhaltungen:
- WO-A1-2015/081538
- US-A1- 2002 081 056
- US-A1- 2008 044 127
- US-A1- 2009 026 479
- US-A1- 2013 071 083
- US-A1- 2014 099 052
- US-A1- 2015 309 340
- CHRISTOPHER T. PHARE ET AL: "Graphene electro-optic modulator with 30 GHz bandwidth", NATURE PHOTONICS, vol. 9, no. 8, 13 July 2015 (2015-07-13), UK, pages 511 - 514, XP055378174, ISSN: 1749-4885, DOI: 10.1038/nphoton.2015.122

## Beschreibung

Die Erfindung betrifft eine Schaltkreisanordnung gemäß dem Oberbegriff des Anspruchs 1 sowie ein Verfahren zum Herstellen einer Schaltkreisanordnung gemäß Anspruch 13.

Schaltkreisanordnungen z.B. in Form von elektrischen Leiterplatten ("Printed Circuit Boards" - PCBs), auf denen integrierte elektrische Schaltkreise (IC) durch elektrische Leiterbahnen miteinander verbunden sind, sind bekannt. Beispielsweise sind auf beiden Seiten eines Trägers der Leiterplatte elektrische Schaltkreise angeordnet, die über elektrische Durchkontaktierungen ("Vias") miteinander verbunden sind. Die Vias werden etwa per Laserbohrung oder Ätzung in dem Träger der Leiterplatte erzeugt. Des Weiteren sind Leiterplatten (Multilayer-Leiterplatten) bekannt, die mehrere übereinander angeordnete Träger umfassen.

Bei höheren Datenraten sind optische Verbindungen auch bei kurzen Übertragungsstrecken zunehmend vorteilhaft oder sogar notwendig. Beispielsweise ist bekannt, in Datenzentren Racks oder auch Prozessorkarten optisch miteinander zu verbinden ("optical backplane"). Am Ausgang eines Racks oder einem Rand einer Karte erfolgt eine elektro-optische Wandlung, wobei z.B. Licht eines Lasers mit einem Signal moduliert wird. Das modulierte optische Signal wird mit einer Glasfaser oder sonstigen flexiblen Wellenleitern zu einem Zielrack oder einer Zielkarte geleitet. Dort erfolgt eine opto-elektronische Rückwandlung mit einem Detektor.

Da insbesondere optische Verbindungen realisiert werden sollen, die sich nicht nur von und zu einem Rand der Leiterplatte erstrecken, sondern eine Vielzahl von Bereichen der Leiterplatte miteinander verbinden sollen, wird die optische Ebene der Leiterplatte nicht neben, sondern unterhalb der elektrischen Ebene der Leiterplatte angebracht. Ein Einkoppeln von Licht in die optische Ebene (in einen dort ausgebildeten optischen Wellenleiter) erfolgt durch Durchgangsöffnungen in dem Träger der Leiterplatte, wobei z.B. in dem optischen Wellenleiter Umlenkspiegel eingeätzt sind, um das Licht in den Wellenleiter einzukoppeln oder aus dem Wellenleiter in Richtung eines in der elektrischen Ebene befindlichen Detektors zu lenken. Die optische Ebene, d.h. die optischen Wellenleiter, derartiger Leiterplatten sind z.B. mit Hilfe von Schichten aus unterschiedlichen Polymermaterialien realisiert, wie etwa in dem Artikel "Polymer waveguides for electro-optical integration in data centers and high-performance computers", Roger Dangel et al., OPTICS EXPRESS, S. 4736, Vol. 23, No. 4 beschrieben. Problematisch kann bei derartigen optischen Leiterplatten die per Freistrahl erfolgende Einkopplung des Lichtes durch Durchgangsöffnungen des Trägers der Leiterplatte hindurch in den oder die optischen Wellenleiter sein.

Schaltkreisanordnungen, bei denen ein optischer Wellenleiter aus einem amorphen Material auf einem Träger angeordnet ist, sind beispielsweise bekannt aus den Dokumenten US 2008/044127 A1, US 2002/081056 A1, US 2013/071083 A1, US 2014/099052 A1, US 2015/309340 A1, WO 2015/081538 A1 und US 2009/026479 A1 und dem Artikel CHRISTOPHER T. PHARE ET AL, "Graphene electro-optic modulator with 30 GHz bandwidth", NATURE PHOTONICS, Bd. 9, Nr.8, 13. Juli 2015(2015-07-13) Seiten 511 - 514.

Das der Erfindung zugrunde liegende Problem besteht darin, eine Schaltkreisanordnung zu schaffen, die eine möglichst effiziente Erzeugung und Übertragung von optischen Signalen ermöglicht.

Dieses Problem wird mit der Bereitstellung einer Schaltkreisanordnung mit den Merkmalen des Anspruchs 1 sowie des Herstellungsverfahrens mit den Merkmalen des Anspruchs 13 gelöst.

Danach wird eine Schaltkreisanordnung zur Verfügung gestellt, mit
- mindestens einem elektronischen Schaltkreis;
- mindestens einem optischen Wellenleiter, wobei der Kern und der Mantel des optischen Wellenleiters aus einem amorphen Material gebildet sind;
- mindestens einem Träger, an dem der optische Wellenleiter angeordnet ist; und
- mindestens einer mit dem elektronischen Schaltkreis elektrisch verbundenen elektro-optisch aktiven Materialschicht, wobei
sich die mindestens eine elektro-optisch aktive Materialschicht zumindest teilweise in dem optischen Wellenleiter erstreckt und die elektrische Verbindung zwischen dem elektronischen Schaltkreis und der mindestens einen elektro-optisch aktiven Materialschicht dadurch hergestellt ist, dass mindestens ein elektrischer Kontakt von dem elektronischen Schaltkreis durch zumindest einen Abschnitt des Mantels (des amorphen Materials) des optischen Wellenleiters hindurch bis zu der mindestens einen elektro-optisch aktiven Materialschicht verläuft (z.B. verläuft der Kontakt durch eine Aussparung in dem Mantelmaterial hindurch) oder mit einem Abschnitt der elektro-optisch aktiven Schicht verbunden ist, der (insbesondere seitlich) aus dem Mantel des optischen Wellenleiters herausragt.

Bei der erfindungsgemäßen Schaltkreisanordnung handelt es sich z.B. um eine optische Leiterplatte, wobei der mindestens eine (z.B. in Form eines integrierten Schaltkreises ausgebildete) elektronische Schaltkreis Teil einer elektrischen Ebene und der optische Wellenleiter Teil einer optischen Ebene der Leiterplatte ist. Der (insbesondere plattenartig ausgebildete und insbesondere zumindest im Wesentlichen starre) Träger dient z.B. zur Anordnung und mechanischen Stabilisierung der elektrischen und/oder der optischen Ebene.

Beispielsweise ist der Träger aus einem elektrisch nicht leitenden Material (z.B. einem Verbundwerkstoff wie FR 4) ausgebildet. An dem Träger ist mindestens ein erster und ein zweiter elektrischer Schaltkreis vorgesehen. Des Weiteren können mehrere optische Wellenleiter vorgesehen sein. Beispielsweise ist über den optischen Wellenleiter eine optische Datenverbindung zwischen zwei elektrischen Schaltkreisen realisiert. Denkbar ist auch, dass die erfindungsgemäße Schaltkreisanordnung ein Mikrochip ist, wobei der Träger in Form eines Substrats (insbesondere eines Halbleitersubstrats) ausgebildet ist, auf dem der elektronische Schaltkreis angeordnet ist.

Durch die Integration der elektro-optisch aktiven Materialschicht in den optischen Wellenleiter entfällt eine potentiell mit optischen Verlusten behaftete und eine möglicherweise umständliche Justage erfordernde Freistrahl-Einkopplung von Licht einer Lichtquelle, die in einer anderen Ebene angeordnet ist als der optische Wellenleiter. Zudem kann die Lichtquelle beabstandet zu der elektrischen Ebene der Schaltkreisanordnung angeordnet werden, wodurch z.B. die Wärmeabfuhr vom Laser verbessert werden kann.

Die elektro-optisch aktive Materialschicht ist ausgebildet, ein über den elektrischen Kontakt von dem elektronischen Schaltkreis empfangenes elektrisches Signal in ein sich in dem optischen Wellenleiter ausbreitendes optisches Signal umzuwandeln und/oder ein sich in dem optischen Wellenleiter ausbreitendes optisches Signal in ein über den elektrischen Kontakt zu dem elektronischen Schaltkreis leitbares elektrisches Signal umzuwandeln. Beispielsweise ermöglicht die elektro-optisch aktive Materialschicht hochratige elektro-optische Wandlungen, etwa für Übertragungsraten oberhalb von 1 Gb/s. Die elektro-optisch aktive Materialschicht bildet z.B. einen Lichtdetektor (z.B. in Form eines Fotoleiter-Detektors oder einer Fotodiode) und/oder einen Modulator (z.B. einen Absorptionsmodulator), mit dem Licht einer von der elektro-optische Materialschicht beabstandeten und insbesondere zu dem optischen Wellenleiter externen Lichtquelle moduliert wird, aus.

Die elektro-optisch aktive Materialschicht kann darüber hinaus zur Lichtverstärkung oder Lichterzeugung genutzt werden. Hierfür wird die elektro-optisch aktive Materialschicht z.B. als p-i-n Heterostruktur ausgeführt und wird durch einen Injektionsstrom zur Inversion gepumpt.

Der optische Wellenleiter besitzt z.B. einen effektiven Brechungsindex n_{eff} < 1,8. Denkbar ist insbesondere, dass der optische Wellenleiter so beschaffen ist, dass eine in ihm geführte optische Welle einen Querschnitt (z.B. Durchmesser) besitzt, der größer als 1 µm, z.B. größer als 5 µm oder größer als 7 µm ist. Insbesondere besitzt der Kern des optischen Wellenleiters Abmessungen, die deutlich größer sind als die Abmessungen der elektro-optisch aktiven Materialschicht (insbesondere größer als ihre Dicke). Der optische Wellenleiter ist zudem insbesondere als Einmodenwellenleiter ausgebildet und kann z.B. passive Komponenten wie Krümmungen, Kreuzungen, Wellenlängenfilter, Splitter oder Combiner und/oder aktive Komponenten wie elektrisch ansteuerbare Wegeschalter, Wellenlängenfilter und/oder Leistungsabschwächer aufweisen.

Gemäß der Erfindung erstreckt sich die elektro-optisch aktive Materialschicht zumindest teilweise in einem Kern des optischen Wellenleiters oder sie grenzt von oben (d.h. an eine einem Substrat abgewandte Seite) an den Kern an.

Die elektro-optisch aktive Materialschicht ist darüber hinaus insbesondere zumindest teilweise in den optischen Wellenleiter eingebettet (z.B. eingegossen). Dies wird z.B. dadurch ermöglicht, dass der optische Wellenleiter zumindest teilweise aus einem amorphen Material gebildet ist, das aus der flüssigen Phase oder der Gasphase (z.B. in mehreren Schritten) an dem Träger erzeugt wurde. So kann das Material (z.B. ein Polymermaterial) auf den Träger (insbesondere großflächig) aufgeschleudert werden, so dass eine großflächige Verbindung zwischen dem Wellenleiter und dem Träger entsteht. Denkbar ist, dass sich die Verbindung zwischen dem Wellenleiter und dem Träger über eine Fläche von mindestens 10 cm², mindestens 25 cm², mindestens 50 cm² oder mindestens 100 cm² erstreckt.

Beispielsweise wird der optische Wellenleiter aus mehreren Schichten eines derartigen Materials gebildet, wobei die amorphen Materialschichten nach dem Anordnen an dem Träger und ggf. einem Aushärten z.B. eine hinreichende Elastizität besitzen, die ein Anordnen der elektro-optisch aktiven Materialschicht zwischen zumindest zwei der amorphen Materialschichten und z.B. auch ein Verpressen mit weiteren Trägern erlaubt.

Beispielsweise ist der optische Wellenleiter (etwa die erwähnten amorphen Materialschichten) zumindest teilweise aus einem Polymermaterial, Siliziumdioxid und/oder Siliziumnitrid gebildet. Geeignete, aus der flüssigen Phase auftragbare Polymere sind z.B. perfluorierte Acrylate, Ormocere, Spin-on-Glass-Polymere (Si-O-Polymere) oder Silikone. Insbesondere das (z.B. aus der Gasphase abgeschiedene) Siliziumdioxid und/oder Siliziumnitrid kann zur Brechungsindexeinstellung auch dotiert sein.

Die erfindungsgemäße Schaltkreisanordnung sieht vor, dass der elektronische Schaltkreis und der optische Wellenleiter auf unterschiedlichen Seiten des Trägers angeordnet sind. Der elektrische Kontakt erstreckt sich insbesondere durch eine Durchgangsöffnung des Trägers hindurch.

Möglich ist auch, dass sich der optische Wellenleiter zwischen zwei Trägern befindet, d.h. eine mehrlagige Schaltkreisanordnung (insbesondere eine mehrlagige Leiterplatte) realisiert ist. Beispielsweise befindet sich jeweils auf einer dem optischen Wellenleiter abgewandten Seite der Träger mindestens ein elektronischer Schaltkreis.

Wie bereits erwähnt, kann die mindestens eine elektro-optisch aktive Materialschicht ein elektrisches Signal in ein optisches Signal und/oder umgekehrt ein optisches Signal in ein elektrisches Signal umsetzen. Es wird in diesem Zusammenhang darauf hingewiesen, dass sich der Begriff "elektro-optisch aktiv" natürlich nicht nur darauf bezieht, dass ein elektrisches Signal in ein optisches Signal umgesetzt wird, sondern auch die umgekehrte Richtung, wonach ein optisches Signal in ein elektrisches Signal gewandelt wird (d.h. die opto-elektronische Wandlung), oder beide Richtungen betreffen kann. Die elektro-optisch aktive Materialschicht ist insbesondere aus einem anderen Material gebildet als der optische Wellenleiter.

Denkbar ist, dass das Material der elektro-optisch aktiven Schicht so ausgewählt ist, dass es bei Lichtwellenlängen im Bereich von 0,6 µm bis 1,7 µm, insbesondere im Bereich von 0,95 µm bis 1,7 µm, aktiv ist; d.h. Licht absorbieren und/oder über angelegte elektrische Spannungen sein (komplexer) Brechungsindex veränderbar ist.

Beispielsweise weist die elektro-optisch aktive Materialschicht ein zweidimensionales Material auf oder ist aus einem derartigen Material gebildet. Bei einem "zweidimensionalen Material" handelt es sich etwa um eine Materiallage, die aus einer Atomlage oder aus maximal 10 Atomlagen eines Materials besteht. Beispielsweise ist die Lage aus Graphen, triazinbasiertem graphitischem Kohlenstoffnitrid, Germanen, Molybdändisulfid, Molybdändiselenid, Silicen und/oder schwarzem Phosphor gebildet oder weist zumindest eines dieser Materialien auf, und zwar jeweils ein- und mehratomlagig. Denkbar ist natürlich auch, dass das zweidimensionale Material (z.B. das erwähnte Graphen) einen Dotierstoff aufweist.

Möglich ist jedoch auch, dass die aktive Materialschicht ein Halbleitermaterial aufweist oder aus einem Halbleitermaterial (insbesondere epitaktisch) gebildet ist. Beispielsweise handelt es sich bei dem Halbleitermaterial um ein III-V-Halbleitermaterial (z.B. epitaktisch gewachsenes InGaAs auf InP). Mit Hilfe eines "Epitaxie-Lift-Off - ELO"-Verfahrens können dünne (z.B. eine Dicke im nm-Bereich aufweisende) Epitaxieschichten dank einer einem Epitaxiesubstrat zugewandten "Opferschicht" und einem mechanischen Träger (z.B. aus Metall) vom Substrat abgelöst werden. Die auf dem Träger verbleibende dünne Epitaxieschicht kann dann auf eine andere Schicht (z.B. eine Polymerschicht zur Bildung des optischen Wellenleiters) transferiert und dort weiter bearbeitet werden.

Das (insbesondere elektrisch isolierende) amorphe Material des optischen Wellenleiters lässt sich anders als das kristalline III-V-Halbleitermaterial oder das zweidimensionale Material auf im Prinzip beliebigen Trägern anordnen. Mit der erfindungsgemäßen Schaltkreisanordnung können also zwei unterschiedliche Materialtypen (amorphes Material des Wellenleiters und kristallines bzw. zweidimensionales Material der elektro-optisch aktiven Schicht) miteinander kombiniert werden.

Beispielsweise sind mehrere elektro-optisch aktive Materialschichten vorhanden, die sich in ihrem Bandabstand und/oder ihrer Dotierung unterscheiden (und z.B. eine p-i-n-Heterostruktur ausbilden).

Gemäß einer anderen Weiterbildung der Erfindung ist der elektrische Kontakt mit einem Abschnitt der elektro-optisch aktiven Materialschicht verbunden, der sich außerhalb eines Kerns des optischen Wellenleiters erstreckt. Beispielsweise weist die elektro-optisch aktiven Materialschicht einen ersten Abschnitt, der sich durch den Kern des optischen Wellenleiters hindurch erstreckt, sowie einen zweiten Abschnitt, der sich außerhalb des Kerns des optischen Wellenleiters befindet, auf. Der elektrische Kontakt ist dann mit dem zweiten Abschnitt der elektro-optisch aktiven Materialschicht verbunden; z.B. über einen Abschnitt, der sich unter einem Winkel (insbesondere senkrecht) zu dem zweiten Abschnitt der elektro-optisch aktiven Materialschicht erstreckt.

Die Erfindung betrifft auch ein Verfahren zum Herstellen einer Schaltkreisanordnung, die insbesondere wie oben beschrieben ausgebildet ist, mit den Schritten:
- Bereitstellen eines Trägers;
- Anordnen einer amorphen Materialschicht an dem Träger, die einen Abschnitt eines Mantels eines optischen Wellenleiters ausbildet;
- Anordnen mindestens einer elektro-optisch aktiven Schicht an der amorphen Materialschicht (wobei sich die elektro-optisch aktive Schicht durchaus über die amorphe Materialschicht hinaus erstrecken kann);
- Erzeugen eines elektrischen Kontakts, der sich zumindest teilweise durch die amorphe Materialschicht (und z.B. auch durch den Träger) hindurch (beispielsweise durch eine Aussparung in der amorphen Materialschicht hindurch) oder an der amorphen Materialschicht vorbei bis zu der elektro-optisch aktiven Schicht erstreckt.

In der amorphen Materialschicht wird dabei eine Aussparung erzeugt und die Aussparung wird vor dem Anordnen der elektro-optisch aktiven Schicht mit einem Kernmaterial befüllt, um einen ersten Abschnitt eines Kerns des optischen Wellenleiters zu erzeugen, wobei die elektro-optisch aktiven Schicht so an der amorphen Materialschicht angeordnet wird, dass sie sich über das Kernmaterial hinweg erstreckt, wobei der elektrische Kontakt insbesondere mit einem Abstand zu dem Kernmaterial erzeugt werden kann; insbesondere, um eine Dämpfung der optischen Welle zu vermeiden oder zumindest gering zu halten.

Gemäß einer Variante des erfindungsgemäßen Verfahrens befindet sich die mindestens eine elektro-optisch aktive Schicht vor dem Anordnen an der amorphen Materialschicht auf einem von dem Träger verschiedenen Trägermaterial, das nach dem Anordnen der elektro-optisch aktiven Schicht an der amorphen Materialschicht entfernt wird. Beispielsweise wird die mindestens eine elektro-optisch aktive Schicht nach dem Entfernen des Trägermaterials strukturiert (z.B. derart, dass mindestens zwei voneinander getrennte Teilbereiche entstehen).

An der amorphen Materialschicht und der elektro-optisch aktiven Schicht wird eine Kernmaterialschicht angeordnet und so strukturiert, dass sie den ersten Abschnitt des Kerns des optischen Wellenleiters ausbildet, wobei der Kern einen Abstand zum elektrischen Kontakt der elektro-optisch aktiven Schicht aufweisen wird. So wird in einem ersten Schritt ein erster (z.B. unterer) Abschnitt des Wellenleiterkerns und in einem zweiten Schritt nach dem Anordnen der elektro-optisch aktiven Schicht ein zweiter (z.B. oberer) Abschnitt des Wellenleiterkerns erzeugt, wobei sich der erste und der zweite Abschnitt des Wellenleiterkerns auf unterschiedlichen Seiten der elektro-optisch aktiven Schicht befinden. Denkbar ist allerdings auch, dass sich der Wellenleiterkern nur auf einer Seite der elektro-optisch aktiven Schicht erstreckt.

Nach dem Erzeugen des Kerns des optischen Wellenleiters wird eine weitere amorphe Materialschicht erzeugt, die einen weiteren Abschnitt des Mantels des optischen Wellenleiters ausbildet.

Bei der amorphen Materialschicht handelt es sich insbesondere um eine Schicht aus einem Polymermaterial, Siliziumdioxid und/oder Siliziumnitrid oder um eine Schicht, die ein derartiges Material aufweist.

Die Erfindung wird im Folgenden anhand von Ausführungsbeispielen unter Bezugnahme auf die Figuren näher erläutert. Es zeigen:
- Fig. 1: eine Schnittansicht einer Schaltkreisanordnung gemäß einem ersten Ausführungsbeispiel der Erfindung;
- Fig. 2: eine Schnittansicht einer Schaltkreisanordnung gemäß einem zweiten Ausführungsbeispiel der Erfindung;
- Fig. 3: eine Schnittansicht einer Schaltkreisanordnung gemäß einem nicht erfindungsgemäßen Beispiel;
- Fig. 4: einen Schnitt durch eine erfindungsgemäße Schaltkreisanordnung quer ihrem optischen Wellenleiter;
- Fig. 5: eine Abwandlung der Fig. 4;
- Fig. 6: eine Draufsicht der Schaltkreisanordnung der Fig. 5;
- Fig. 7: einen Schnitt durch eine erfindungsgemäße Schaltkreisanordnung gemäß einem weiteren Ausführungsbeispiel der Erfindung;
- Fig. 8: eine Abwandlung der Fig. 7;
- Fig. 9 und 10: weitere Abwandlungen der Fig. 7;
- Fig. 11: die Abwandlung der Fig. 10 in Draufsicht;
- Fig. 12 bis 17: Schritte bei der erfindungsgemäßen Herstellung einer Schaltkreisanordnung mit einem elektro-optischen Element in Form eines Fotoleiters;
- Fig. 18: einen Schnitt durch einen alternativen Aufbau der erfindungsgemäßen Schaltkreisanordnung;
- Fig. 19 bis 23: Schritte bei der erfindungsgemäßen Herstellung einer Schaltkreisanordnung mit einem elektro-optischen Element in Form eines Modulators;
- Fig. 24: einen Schnitt durch einen alternativen Aufbau der erfindungsgemäßen Schaltkreisanordnung, wonach der Modulator aus Schichten eines III-V-Halbleiters gebildet ist; und
- Fig. 25: eine Draufsicht einer Schaltkreisanordnung gemäß einem weiteren Ausführungsbeispiel der Erfindung.

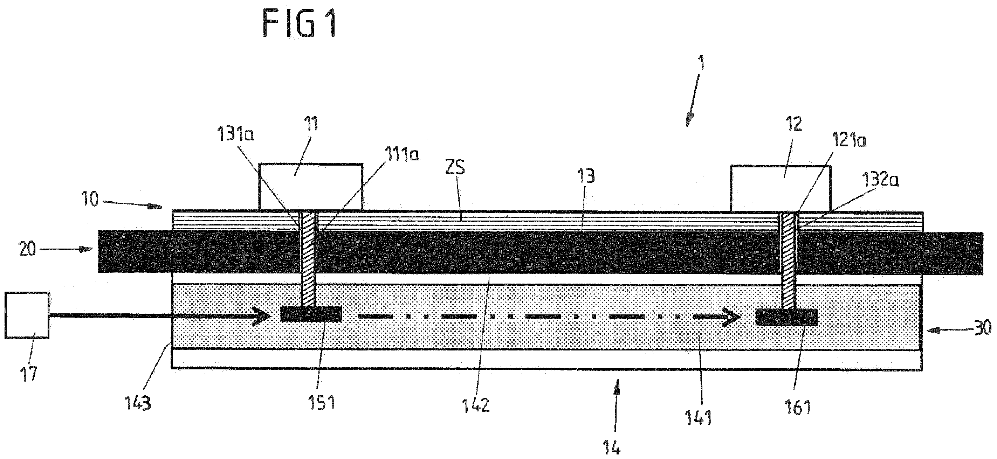

Fig. 1 zeigt eine Schnittansicht einer erfindungsgemäßen Schaltkreisanordnung in Form einer optischen Leiterplatte 1. Die optische Leiterplatte 1 umfasst einen ersten und einen zweiten elektronischen Schaltkreis in Form eines ersten bzw. zweiten ICs 11, 12. Die ICs 11, 12 sind Bestandteile einer elektrischen Ebene 10 der optischen Leiterplatte 1.

Die ICs 11, 12 sind auf einer Trägerplatte 13 (z.B. in Form einer FR 4-Platte) der Leiterplatte 1 angeordnet, wobei die Trägerplatte 13 eine mechanische Ebene 20 der Leiterplatte ausbildet. Denkbar ist, dass die ICs 11, 12 unmittelbar auf der Trägerplatte 13 angeordnet sind. Möglich ist allerdings auch, dass die Verbindung mit der Trägerplatte 13 über eine Zwischenschicht ZS erfolgt.

Auf der den ICs 11, 12 abgewandten Seite der Trägerplatte 13 ist eine optische Ebene 30 der Leiterplatte 1 ausgebildet, die mindestens einen (z.B. aus Polymer ausgebildeten) optischen Wellenleiter 14 umfasst. In dem optischen Wellenleiter 14 (z.B. zumindest teilweise in einem Kern 141 des optischen Wellenleiters 14) befindet sich gegenüber dem ersten IC 11 eine erste elektro-optisch aktive Materialschicht 151, die dazu dient, ein elektrisches Signal des ersten ICs 11 in ein optisches Signal zu wandeln. Das von der ersten elektro-optische aktiven Materialschicht 151 erzeugte optische Signal breitet sich in dem optischen Wellenleiter 14 bis zu einer zweiten elektro-optische aktiven Materialschicht 161 aus, wobei sich die zweite elektro-optisch aktive Materialschicht 161 gegenüber dem zweiten IC 12 befindet und ebenfalls in dem optischen Wellenleiter 14 eingebettet ist.

Das von der ersten elektro-optische aktiven Materialschicht 151 erzeugte Signal wird von der zweiten elektro-optische aktiven Materialschicht 161 in ein elektrisches Signal umgesetzt und an den zweiten IC 12 geleitet. Somit wird über den optischen Wellenleiter 14 und die beiden elektro-optische aktiven Materialschichten 151, 161 eine optische Kommunikationsverbindung zwischen den ICs 11, 12 realisiert.

Die elektrische Verbindung der ICs 11, 12 mit den jeweils zugeordneten elektro-optisch aktiven Materialschichten 151, 161 erfolgt über zwei elektrische Kontakte, von denen in Fig. 1 jeweils einer (Kontakte 111a, 121a) dargestellt ist. Die elektrischen Kontakte 111a, 121a erstrecken sich jeweils senkrecht zur Trägerplatte 13 durch eine Durchgangsöffnung (Via) 131a, 132a der Trägerplatte 13 und einen Mantel 142 des optischen Wellenleiters 14 hindurch bis zu der jeweiligen elektro-optisch aktiven Materialschicht 151, 161. Die Wandlung des elektrischen in das optische Signal und umgekehrt erfolgt also jeweils in dem optischen Wellenleiter 14 selber, so dass ein häufig mit Verlusten verbundenes Einkoppeln eines optischen Signals aus der elektrischen Ebene in den optischen Wellenleiter 14 (etwa durch Öffnungen in der Trägerplatter 13 hindurch) entfällt.

Die erste elektro-optisch aktive Materialschicht 151 ist insbesondere als Modulator ausgebildet oder formt eine Schicht eines Modulators, der Licht einer zu der elektro-optisch aktiven Materialschicht 151 externen und außerhalb des Wellenleiters 14 angeordneten Lichtquelle 17 moduliert. Das von der Lichtquelle 17 emittierte Licht wird über eine Facette 143 des Wellenleiters 14 in diesen eingekoppelt. Bei der Lichtquelle 17 handelt es sich z.B. um einen Laser (insbesondere einen Halbleiterlaser), eine LED oder einen Faser-Laser oder eine Lichtquelle in Kombination mit einem Faser-Verstärker. Beispielsweise emittiert die Lichtquelle 17 im Wellenlängenbereich von 0,6 µm bis 1,7 µm, insbesondere im Bereich von 0,95 µm bis 1,7 µm. Die zweite elektro-optisch aktive Materialschicht 161 ist ein Empfänger oder bildet eine Schicht eines Empfängers, der z.B. in Form einer Fotodiode (etwa einer p-i-n-Fotodiode) oder eines Fotoleiters ausgebildet ist. Denkbar ist auch, dass beide elektro-optisch aktive Materialschichten 151 sowohl als Modulator (d.h. als Sender) als auch als Empfänger ausgebildet sind, um eine bidirektionale Datenübertragung zwischen den beiden ICs 11, 12 zu ermöglichen.

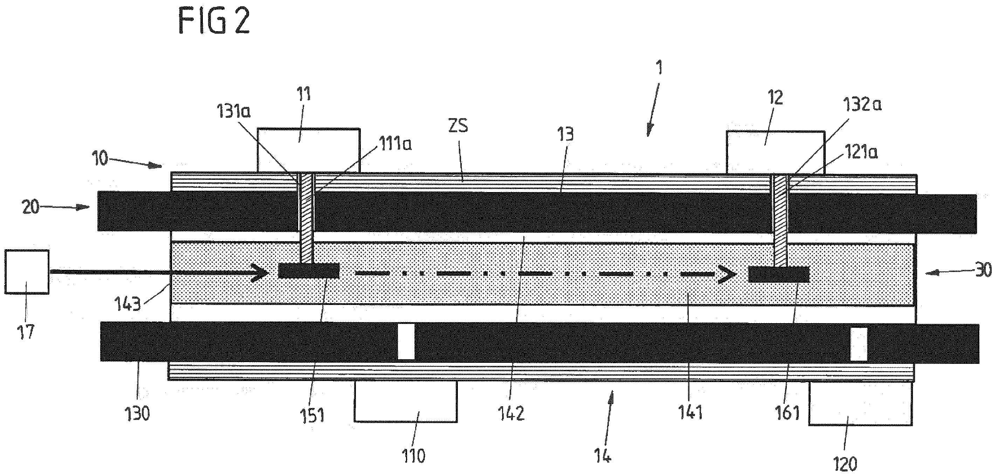

Fig. 2 betrifft eine Weiterbildung der Fig. 1, wonach eine zweite mechanische Ebene in Form einer zweiten Trägerplatte 130 vorgesehen ist, die sich auf einer der ersten Trägerplatte 13 abgewandten Seite des optischen Wellenleiters 14 befindet. Der optische Wellenleiter 14 erstreckt sich also zwischen den beiden Trägerplatten 13, 130, wobei der Mantel des optischen Wellenleiters 14 in Kontakt sowohl an der ersten, als auch an der zweiten Trägerplatte 13, 130 anliegen kann.

An der dem optischen Wellenleiter 14 abgewandten Seite der zweiten Trägerplatte 130 sind weitere ICs 110, 120 angeordnet. Denkbar ist, dass analog zu den ICs 11, 12 auch zwischen den ICs 110, 120 eine optische Kommunikationsverbindung realisiert ist; z.B. ebenfalls über den optischen Wellenleiter 14 oder über einen weiteren optischen Wellenleiter (nicht dargestellt), der auch zwischen den Trägerplatten 13, 130 verläuft.

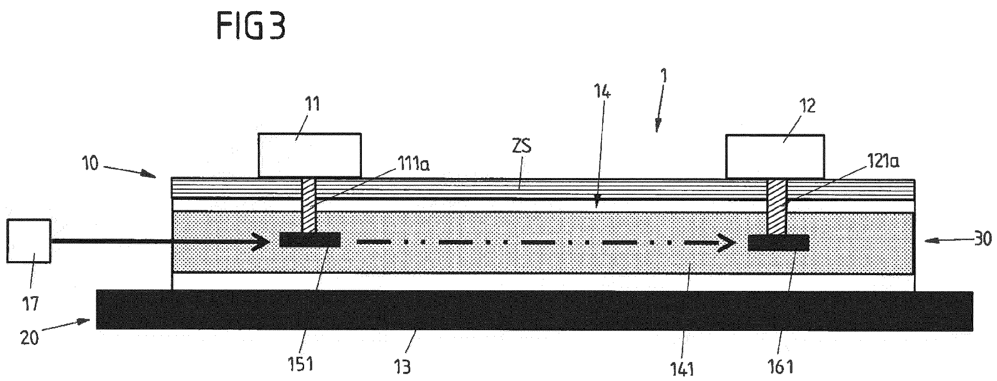

Figur 3 betrifft ein nicht erfindungsgemäßes Beispiel, wonach die elektrische Ebene 10 (d.h. die ICs 11, 12) und die optische Ebene 30 (d.h. der mindestens eine optische Wellenleiter 14) nicht auf unterschiedlichen Seiten der Trägerplatte 13 angeordnet sind, sondern auf derselben Seite. Genauer befindet sich der optische Wellenleiter 14 mit den elektro-optisch aktiven Materialschichten 151, 161 zwischen der Trägerplatte 13 und den ICs 11, 12. Möglich ist, dass die ICs 11, 12 unmittelbar oder über eine Verbindungsschicht auf dem optischen Wellenleiter 14 angeordnet sind. Die elektrischen Kontakte 111a, 121a erstrecken sich somit nicht durch die Trägerplatte 13 hindurch, wohl aber durch einen Abschnitt des Mantels 142 des optischen Wellenleiters 14.

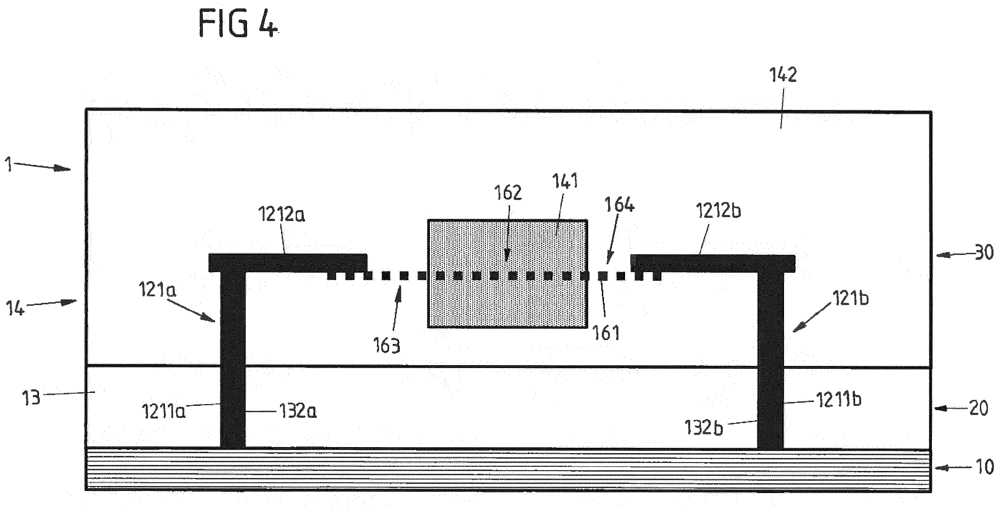

In Figur 4 ist ein Schnitt durch eine erfindungsgemäße optische Leiterplatte im Bereich einer elektro-optisch aktiven Materialschicht 161 und zwar senkrecht zum optischen Wellenleiter 14 der Leiterplatte 1 gezeigt. Beispielsweise ist die Leiterplatte gemäß Fig. 1 ausgestaltet; d.h. die elektrische Ebene 10 und die optische Ebene 30 befinden sich auf unterschiedlichen Seiten der Trägerplatte 13, wobei sich der dargestellte Schnitt z.B. auf Höhe des zweiten ICs 12 und der zweiten elektro-optisch aktiven Materialschicht 161 erstreckt.

Die elektro-optisch aktive Materialschicht 161 erstreckt sich mit einem ersten (mittleren) Abschnitt 162 in dem Kern 141 des Wellenleiters 14. Ein zweiter und ein dritter (seitlicher) Abschnitt 163, 164 der aktiven Schicht 161 (einstückig mit dem ersten Abschnitt 152 verbunden) verläuft außerhalb des Kerns 141 in dem Mantel 142 des Wellenleiters 14. Bei der aktiven Schicht 161 handelt es sich z.B. um ein zweidimensionales Material. Geeignete zweidimensionale Materialien wurden bereits oben erläutert. Denkbar ist, dass die aktive Schicht 161 zur Detektion von Licht ausgebildet ist, wobei z.B. von der elektrischen Ebene aus eine Spannung an die aktive Schicht angelegt und der bei Empfang eines Lichtsignals erzeugte modulierte Fotostrom gemessen wird.

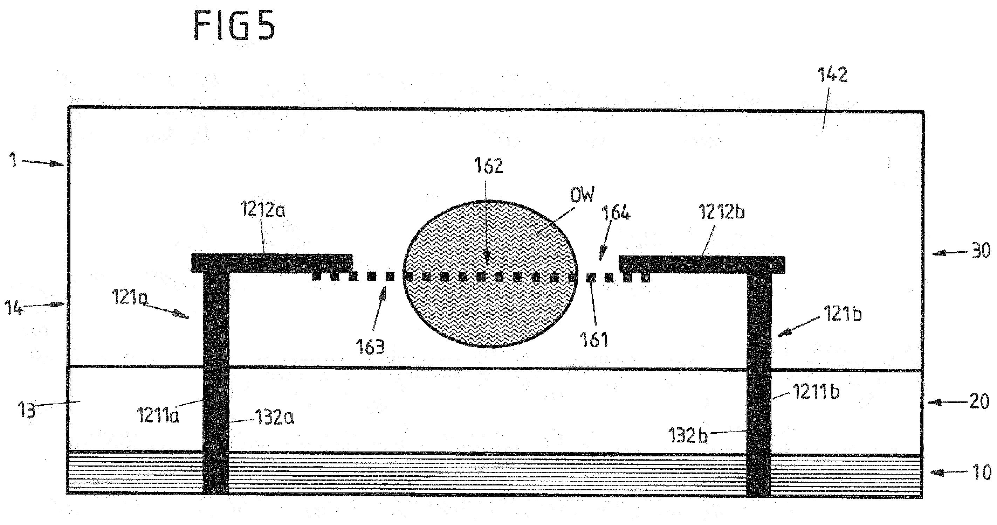

Zur Verbindung der aktiven Schicht 161 mit der elektrischen Ebene 10 (z.B. mit einem IC wie den IC 12 der Fig. 1) sind zwei elektrische Kontakte 121a, 121b vorhanden, die sich durch die Trägerplatte 13 hindurch zu der aktiven Schicht 161 erstrecken. Genauer ist der Kontakt 121a mit dem einen der sich außerhalb des Wellenleiterkerns 141 befindlichen Abschnitt 163 der aktiven Schicht 161 verbunden, während der andere Kontakt 121b den anderen außerhalb des Wellenleiterkerns 141 angeordneten Abschnitt 164 der aktiven Schicht 161 kontaktiert. Somit ragen die Kontakte 121a, 121b möglichst wenig in eine in dem optischen Wellenleiter geführte Welle hinein. Dies ist in Fig. 5 dargestellt, die eine in dem Wellenleiter 14 geführte optische Welle OW zeigt.

Die Kontakte 121a, 121b weisen jeweils einen ersten Abschnitt 1211a, 1211b, der sich senkrecht zu der Trägerplatte 13 erstreckt, und einen zweiten Abschnitt 1212a, 1212b auf, wobei sich der zweite Abschnitt 1212a, 1212b jeweils abgewinkelt von dem ersten Abschnitt 1211a, 1211b erstreckt und mit dem zugeordneten Abschnitt 163, 164 der aktiven Schicht 161 verbunden ist. Insbesondere verlaufen die ersten Abschnitte 1211a, 1211b jeweils senkrecht zu den zweiten Abschnitten 1212a, 1212b.

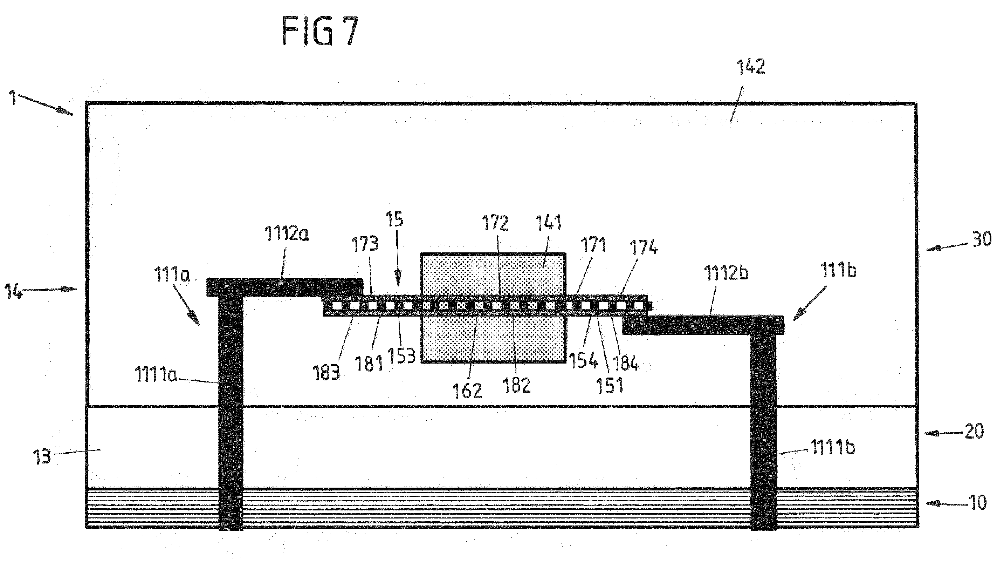

Die anhand der Fig. 4 erläuterte Kontaktierung lässt sich jedoch grundsätzlich auch für andere elektro-optisch aktive Materialschichten verwenden; z.B. auch für elektro-optisch aktive Elemente, die mehr als eine aktive Schicht umfassen und/oder die anstelle einer Schicht aus einem zweidimensionalen Material eine Schicht oder mehrere Schichten aus einem Halbleitermaterial (z.B. in Form einer Fe-dotierten InGaAs-Schicht) aufweisen (vgl. z.B. die Fig. 7 bis 11).

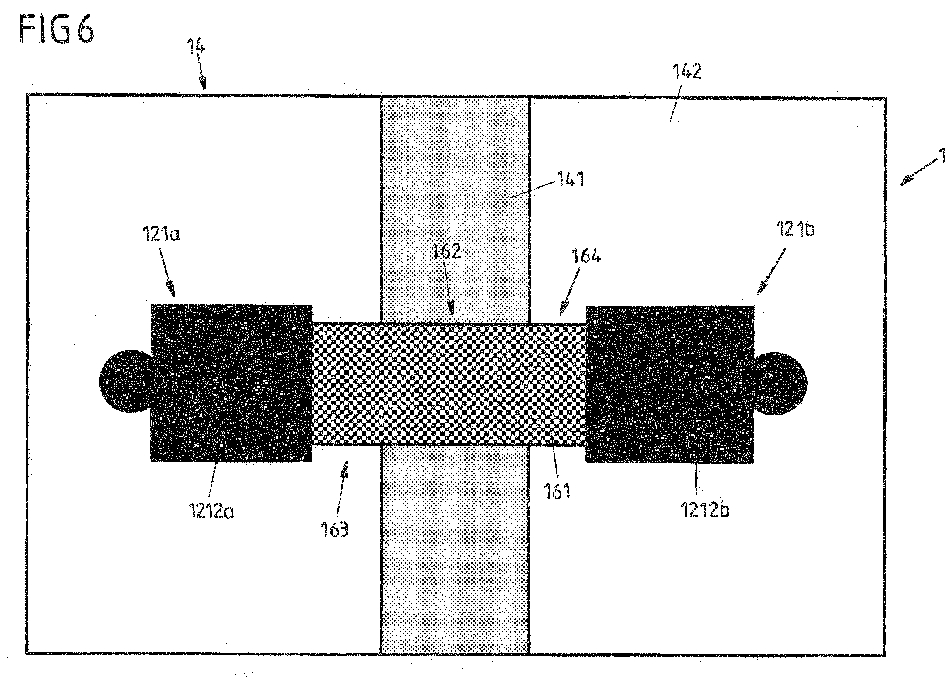

Figur 6 zeigt den in den Fig. 4 und 5 dargestellten Bereich der Leiterplatte 1 in Draufsicht.

Figur 7 zeigt analog zu Fig. 4 einen Schnitt durch eine erfindungsgemäße Leiterplatte im Bereich einer elektro-optisch aktiven Materialschicht 151, die insbesondere Teil eines Lichtmodulator ist (z.B. entsprechend der ersten elektro-optisch aktiven Materialschicht 151 der Figur 1). Die Kontaktierung erfolgt analog zur Figur 4 über elektrische Kontakte 111a, 111b und zwar über deren zweite Abschnitte 1112a, 1112b, die sich jeweils abgewinkelt von ersten Abschnitten 1111a, 1111b erstrecken.

Die elektro-optisch aktive Materialschicht 151 ist im Ausführungsbeispiel der Fig. 7 Teil einer p-i-n-Dioden-Struktur, wobei an die aktive Schicht 151 auf einer Seite eine p-dotierte Schicht 181 und auf der anderen Seite eine n-dotierte Schicht 171 angrenzt. Bei den Schichten 151, 181 und 171 handelt es sich insbesondere um III-V-Halbleiterschichten; z.B. auf der Basis von Indiumphosphid, wobei die aktive Schicht 151 z.B. aus InGaAs und die dotierten Schichten 171, 181 aus p- bzw- n-dotierten Indiumphosphid bestehen. Zur Modulation einer in dem optische Wellenleiter 14 geführten optischen Welle, die insbesondere von einer zu dem Wellenleiter 14 separaten Lichtquelle (etwa nach Art der Lichtquelle 17 der Fig. 1) erzeugt wird, wird über die p-Schicht 171 und die n-Schicht 181 eine modulierte elektrische Spannung an die aktive Schicht 151 angelegt. Die Spannung verändert den Brechungsindex und die Absorption der aktiven Schicht 151 und somit des Wellenleiters 14, wodurch eine Lichtmodulation in Abhängigkeit von der angelegten Spannung erzeugbar ist. Ein derartiges elektro-optisches Element 15 kann auch als Lichtempfänger betrieben werden, indem die durch eine Lichteinstrahlung bewirkten Fotospannungen und/oder -ströme gemessen werden.

Die Schichten 151, 171, 181 weisen jeweils einen mittleren Abschnitt auf 152, 172, 182, der sich im Bereich des Wellenleiterkerns 141 erstreckt, sowie zwei seitliche Abschnitte 153, 154, 173, 174, 183, 184 die außerhalb des Wellenleiterkerns 141 im Mantel 142 des Wellenleiters 14 verlaufen. Der eine (in Fig. 7 linke) Kontakt 111a ist mit dem linken seitlichen Abschnitt 173 der p-dotierten Schicht 171 verbunden, während der rechte Kontakt 111b mit dem rechten seitlichen Abschnitt 184 der n-dotierten Schicht 181 verbunden ist.

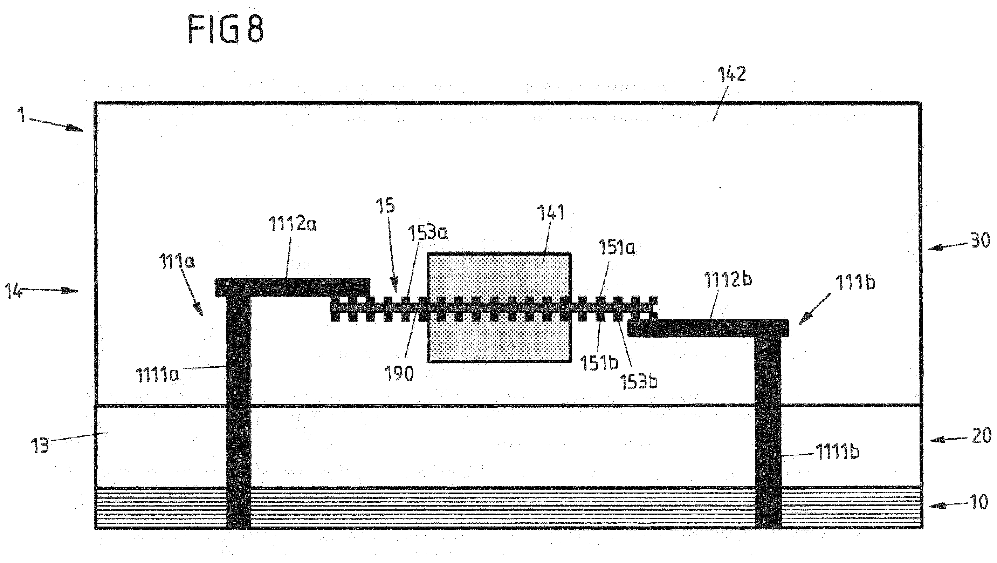

Eine alternative Ausgestaltung des elektro-optischen Elements 15 zur Lichtmodulation ist in Fig. 8 gezeigt. Dort sind zwei parallel zueinander verlaufende elektro-optisch aktive Schichten 151a, 151b vorgesehen, die jeweils aus einem zweidimensionalen Material ausgebildet sind und die durch eine zwischen ihnen verlaufende dielektrische Schicht 190 (z.B. aus Siliziumnitrid oder Siliziumoxid) elektrisch voneinander getrennt sind. Die Kontaktierung des elektro-optischen Elements 15 erfolgt ähnlich der Fig. 7 über eine Kontaktierung eines linken Kontaktabschnitts 153a der oberen elektro-optisch aktiven Schicht 151a mit dem linken Kontakt 111a und eine Kontaktierung eines rechten Kontaktabschnitts 153b der unteren elektro-optisch aktiven Schicht 151b mit dem rechten Kontakt 111b.

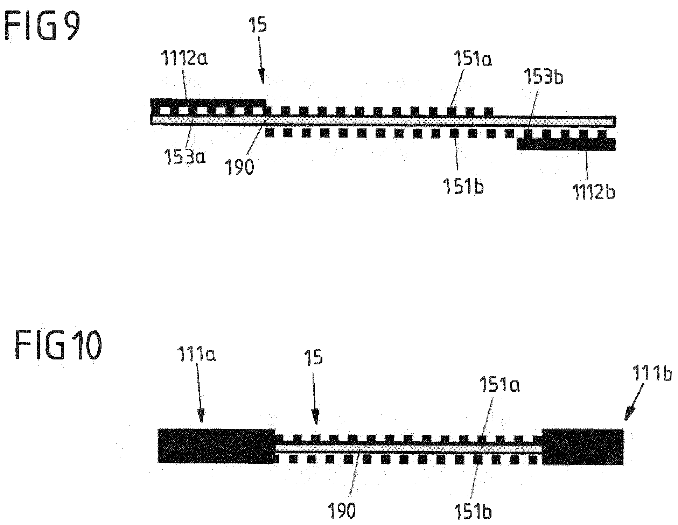

Die Figuren 9 und 10 zeigen weitere mögliche Ausgestaltungen eines elektro-optischen Elements 15 der erfindungsgemäßen Schaltkreisanordnung, das sowohl zur Lichtmodulation als auch zur Lichtdetektion verwendet werden kann.

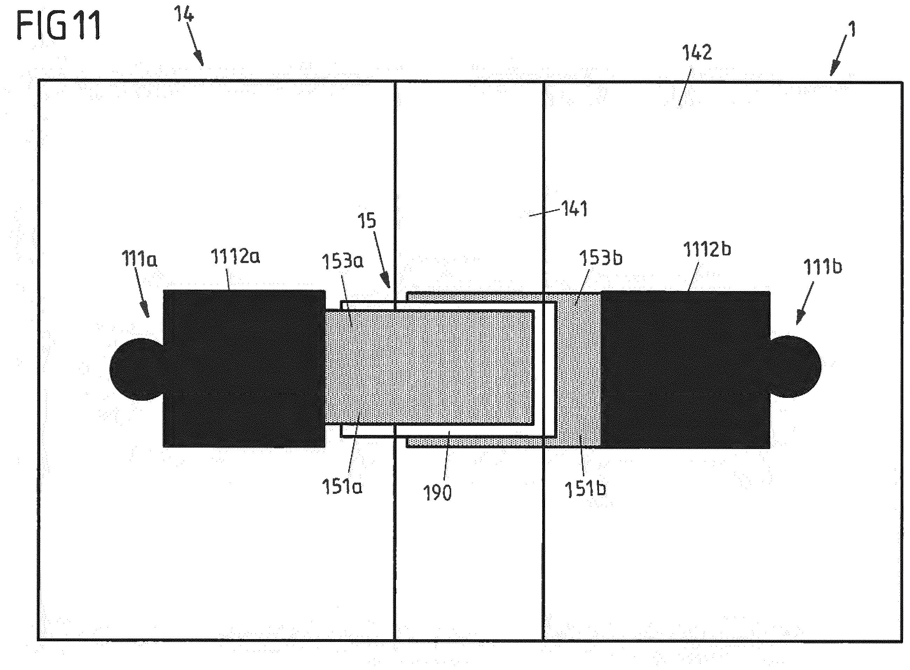

Das elektro-optische Element 15 der Fig. 9 entspricht demjenigen der Fig. 8, wobei jedoch die aktiven Schichten 151a, 151b nicht einander vollständig überlappend ausgebildet sind. Vielmehr erstrecken sich die untere Kontaktschicht 151b nicht in den Bereich des linken Kontaktabschnitts 153a der oberen Kontaktschicht 151a und die obere Kontaktschicht 151a nicht in den Bereich des rechten Kontaktabschnitts 153b der unteren Kontaktschicht 151b hinein. Über eine solche Kontaktierung kann das elektro-optische Element 15 als Lichtmodulator betrieben werden. Das elektro-optische Element 15 der Fig. 9 ist in Fig. 11 in Draufsicht dargestellt.

Durch eine Kontaktierung jeweils sowohl der oberen als auch der unteren aktiven Schicht 151a, 151b, d.h. durch eine Parallelschaltung der aktiven Schichten 151a, 151b, wird ein Fotoleiter-Detektor realisiert; vgl. Fig. 10.

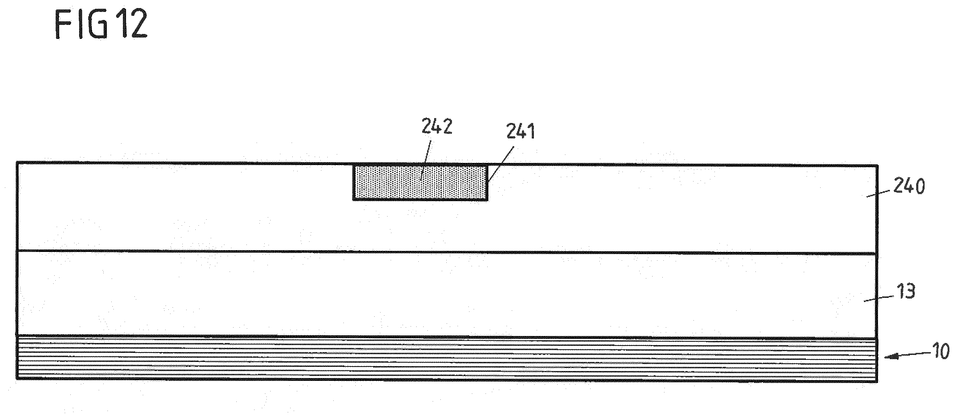

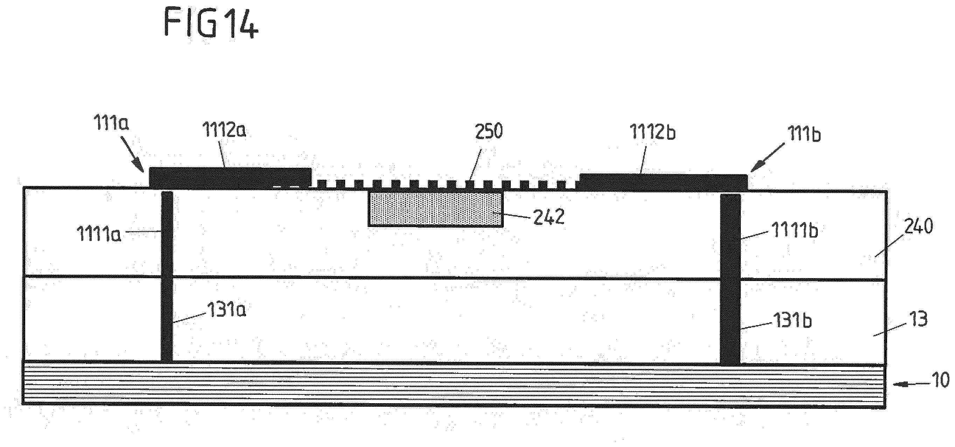

Die Figuren 12 bis 17 beziehen sich auf Schritte bei der Herstellung einer erfindungsgemäßen Schaltkreisanordnung in Form einer Leiterplatte unter Verwendung einer Variante des erfindungsgemäßen Verfahrens. Es ist jeweils ein Schnitt senkrecht zu einer Trägerplatte 13 gezeigt. Das elektro-optische Bauelement der Leiterplatte, das mit diesem Verfahren erzeugt wird, kann insbesondere als Fotoleiter-Detektor verwendet werden.

Gemäß Fig. 12 wird an einer Seite der Trägerplatte 13 zunächst eine erste Polymerschicht 240 ausgebildet (z.B. durch Aufschleudern des Polymermaterials auf den Träger 13), die einen Teil des Mantels eines optischen Wellenleiters bildet. An der Trägerplatte 13 kann zu diesem Zeitpunkt bereits zumindest teilweise eine elektrische Ebene 10 (z.B. aufweisend mindestens eine Leiterbahn) vorhanden sein. Denkbar ist allerdings auch, dass die elektrische Ebene 10 erst später erzeugt oder zumindest später vervollständigt wird.

In einer der Trägerplatte 13 abgewandten Seite der Polymerschicht 240 wird eine Aussparung 241 (z.B. mit einer Breite von 3 bis 7 µm) erzeugt (insbesondere per Ätzverfahren), die zur Ausbildung eines Abschnitts des Wellenleiterkerns dient. Beispielsweise wird die Aussparung 241 mit einer Tiefe (z.B. 2 bis 4 µm) erzeugt, die zumindest näherungsweise der Hälfte der gewünschten Höhe des Wellenleiterkerns entspricht. Die Aussparung 241 wird mit einem Kern-Polymermaterial 242 befüllt, das einen höheren Brechungsindex aufweist als das Polymermaterial der Polymerschicht 240. Das Kern-Polymermaterial 242 wird in ausreichender Dicke zur Füllung der Aussparung 241 aufgetragen, wobei überschüssiges Material außerhalb der Aussparung 241 wieder entfernt wird.

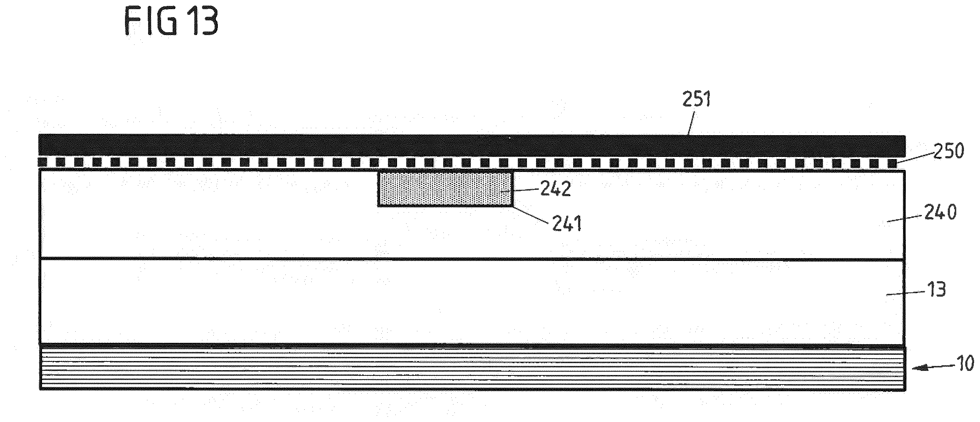

Anschließend wird auf der Polymerschicht 240 und dem Kern-Polymermaterial 242 eine Schicht 250 aus einem elektro-optisch aktiven Material erzeugt (Fig. 13); z.B. bestehend aus einem III-V-Halbleitermaterial oder einem zweidimensionalen Material. Denkbar ist, dass sich die Schicht 250 zunächst an einem Träger 251 (z.B. einer Trägerfolie etwa aus Metall) befindet, die nach dem Anordnen der Schicht 250 auf der Polymerschicht 240 entfernt wird (ELO-Verfahren, wie oben bereits erwähnt). Die Präparation der aktiven Schicht(en) wird weiter unten separat für zweidimensionales Material und für III-V Halbleiterschichten beschrieben. Die dünne aktive Schicht 250 hält ohne weitere Klebung insbesondere aufgrund von van-der-Waals Kräften. Neben dem Transfer der kompletten aktiven Schicht 250 in einem Stück kann auch ein Transfer von kleineren aktiven Segmenten sinnvoll sein. So kann z.B. eine elektro-optische Wandlung auf ausgewählte Bereiche der Leiterplatte 1 konzentriert werden. Denkbar ist auch, dass unterschiedliche aktive Schichten (Schichtsegmente) für verschiedenartige Bauelementfunktionen angeordnet werden.

In Standardlithographie und -ätzschritten werden nun der Träger 251 komplett und die aktive Materialschicht 250 überall dort entfernt, wo sie nicht benötigt wird. Das Material der aktiven Schicht 250 soll im Wesentlichen nur an den gewünschten Stellen der elektro-optisch Wandlungen verbleiben, z.B. jedoch zur Kontaktierung aus dem Wellenleiterkern seitlich herausragen.

Nach dem Entfernen des Trägers 251 und dem Strukturieren der aktiven Schicht 250 werden durch weitere Lithographie und mindestens einen Ätzschritt nun in dem Träger 13 und in der Polymerschicht 240 Durchgangsöffnungen (Vias) 131a, 131b erzeugt. Anschließend werden erste Kontaktabschnitte 1111a, 1111b angeordnet (erzeugt), die sich von einer der aktiven Schicht 250 zugewandten Oberseite der Polymerschicht 240 durch die Durchgangsöffnungen 131a, 131b hindurch bis zu der elektrischen Ebene 10 (d.h. bis zu einer der Polymerschicht 240 abgewandten Seite des Trägers 13) erstrecken. Beispielsweise werden die Durchgangsöffnungen 131a, 131b zur Herstellung der ersten Kontaktabschnitte 1111a, 1111b mit einem leitfähigen Material (z.B. Lötzinn) befüllt. Denkbar ist auch, dass die Herstellung der Durchgangsöffnungen 131a, 131b und der ersten Kontaktabschnitte 1111a, 1111b vor dem Anordnen der aktiven Schicht 250 erfolgt. Möglich ist auch, dass die Abschnitte der Durchgangsöffnungen131a, 131b in dem Träger 13 und auch der dort verlaufende Teilabschnitt der ersten Kontaktabschnitte 1111a, 1111b bereits zu Beginn (insbesondere vor dem Erzeugen der Polymerschicht 240) der Leiterplattenherstellung vorhanden ist. Die Anordnung mindestens eines elektronischen Schaltkreises an dem Träger 13 erfolgt insbesondere nach Herstellung zumindest der Kontaktabschnitte 1111a, 1111b.

Auf der Oberseite der Polymerschicht 240 werden sodann zweite Kontaktabschnitte 1112a, 1112b erzeugt (z.B durch Aufdampfen von Gold oder einem sonstigen Metall und Strukturierung), die jeweils einerseits mit den ersten Kontaktabschnitten 1111a, 1111b und andererseits mit der aktiven Schicht 250 verbunden sind. Die ersten und die zweiten Kontaktabschnitte 1111a, 1111b, 1112a, 1112b bilden zusammen die Kontakte 111a, 111b.

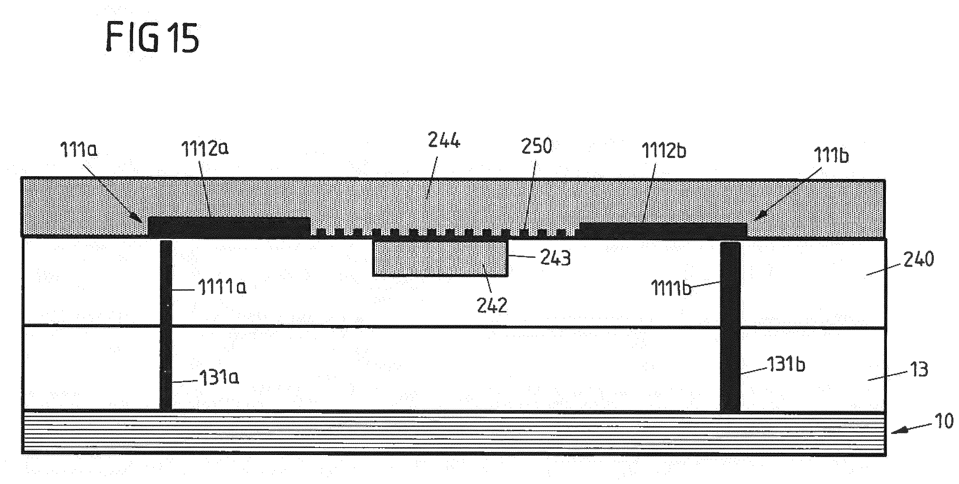

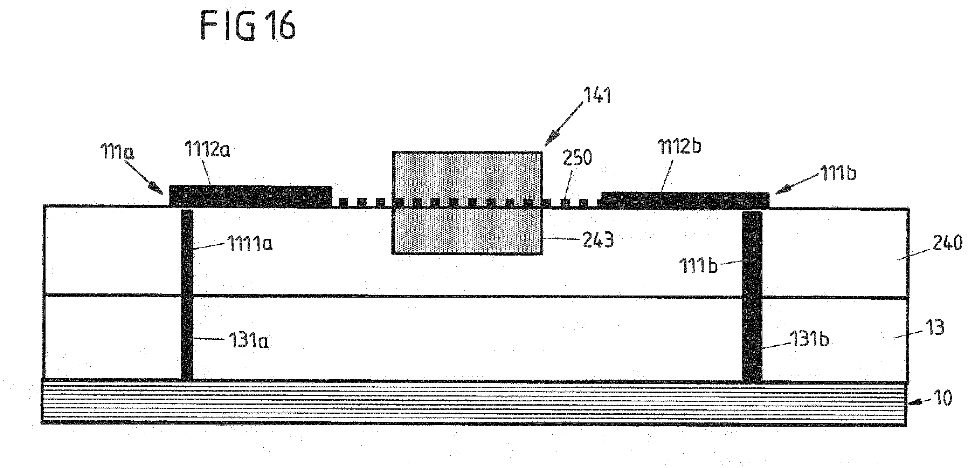

Danach wird eine weitere Polymerschicht 244 aus Kern-Polymermaterial erzeugt, die zumindest teilweise die Polymerschicht 240, die zweiten Kontaktabschnitte 1112a, 1112b und/oder die aktive Schicht 250 bedeckt (Fig. 15) und die zum Erzeugen eines oberen Abschnitts des Wellenleiterkerns dient. Die Polymerschicht 244 füllt möglicherweise vorhandene Gräben und kann nach ihrem Erzeugen planarisiert werden. Denkbar ist, dass die Polymerschicht 244 mit einer Dicke erzeugt wird, die der Hälfte der gewünschten Höhe des Wellenleiterkerns entspricht. Die Polymerschicht 244 wird entsprechend dem gewünschten Verlauf des optischen Wellenleiters (dem Verlauf der Aussparung 243 folgend) strukturiert, um den vollständigen Wellenleiterkern 141 zu bilden (Fig. 16).

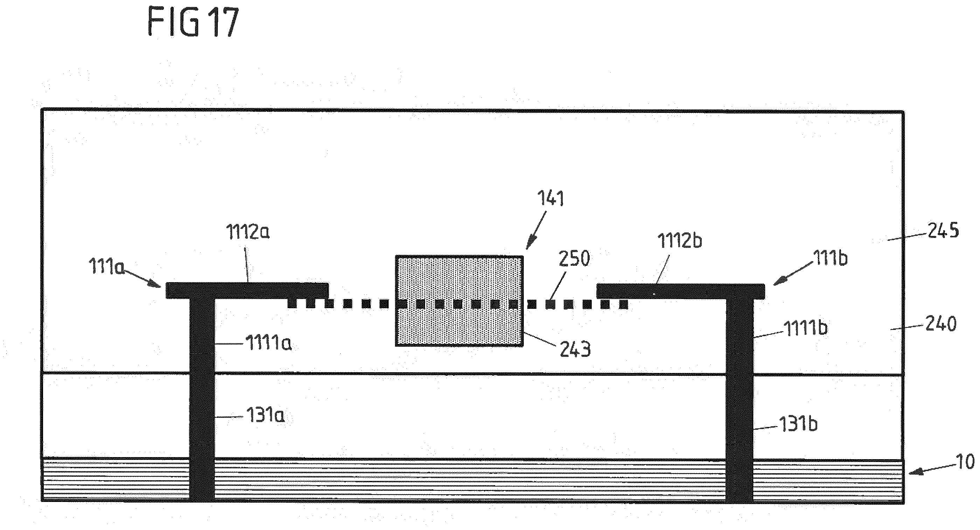

Nach der (insbesondere seitlichen) Strukturierung der Polymerschicht 244 wird eine weitere Polymerschicht 245 aufgetragen und ausgehärtet, die eine obere Mantelschicht des optischen Wellenleiters ausbildet, wie in Fig. 17 gezeigt. Die Polymerschicht 245 kann aus demselben Polymermaterial gebildet sein wie die untere Polymerschicht 240. Die optische Ebene ist damit fertig gestellt. Nun kann die elektrische Ebene bestückt werden und/oder die optische Ebene kann in einer Sandwichstruktur mit einem weiteren Träger verbunden oder verpresst werden.

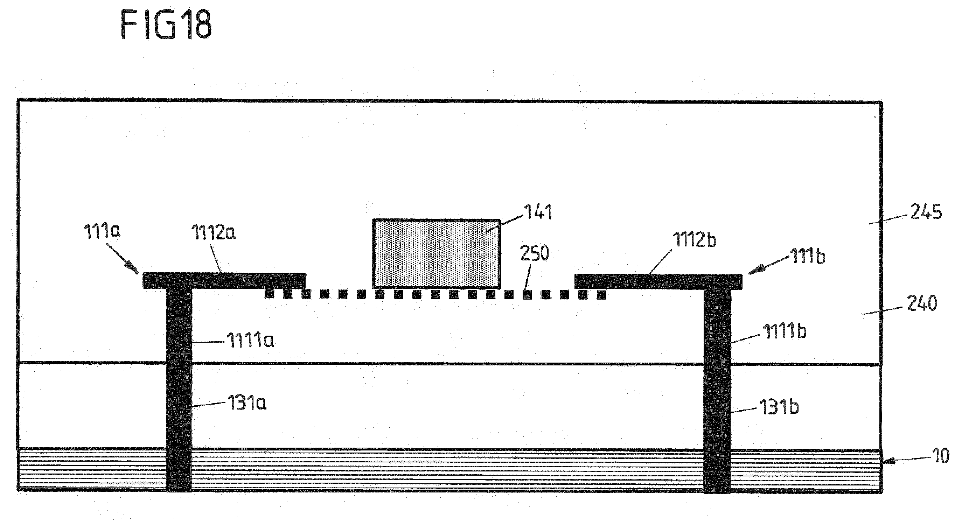

Fig. 18 betrifft eine Abwandlung des Herstellungsverfahrens, wonach der Wellenleiterkern 141 in einem Schritt erzeugt wird. Hierzu wird nach dem Erzeugen der aktiven Schicht 250 auf der unteren Polymerschicht 240 eine Kernmaterialschicht (insbesondere ähnlich der Polymerschicht 244 der Fig. 15) aufgetragen und entsprechend strukturiert (insbesondere geätzt). Der auf dieser Weise erzeugte Wellenleiterkern 141 grenzt an die aktive Schicht 250 an, d.h. die aktive Schicht 250 erstreckt sich in dieser Variante nicht durch den Wellenleiterkern hindurch. Denkbar ist auch, dass der Wellenleiterkern 241 nicht in der oberen Mantelschicht 245, sondern in der unteren Mantelschicht 240 erzeugt wird.

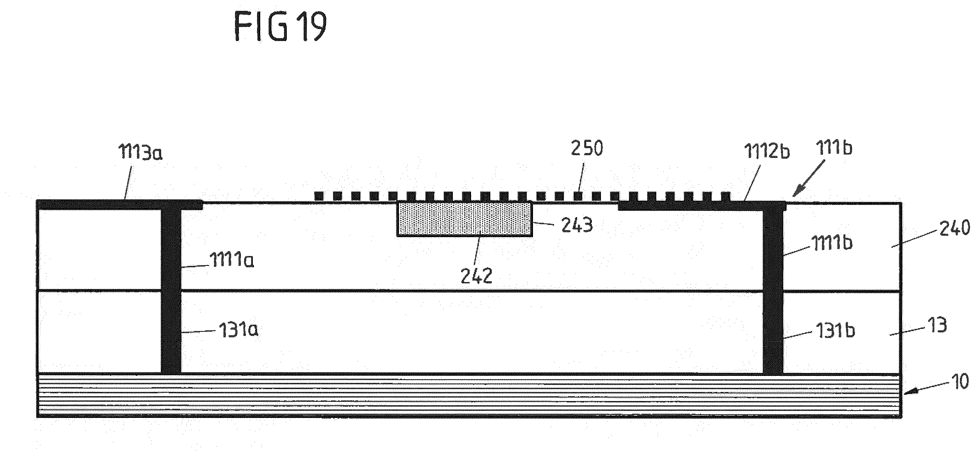

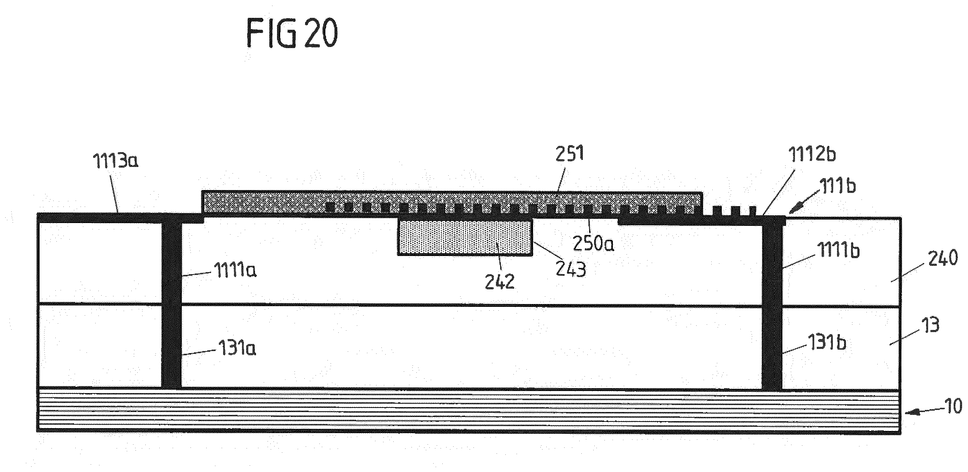

Zur Herstellung einer Leiterplatte mit einem elektro-optischen Element, das als Lichtmodulator (insbesondere als Elektroabsorptionsmodulator) betreibbar ist, wird in Abwandlung des Verfahrens der Fig. 12 bis 17 nach dem Erzeugen des rechten Kontakts 111b eine erste, untere elektro-optisch aktive Schicht 250a und anschließend eine dielektrische Schicht 251 erzeugt (Fig. 19 und 20). Als dielektrische Schicht 251 wird z.B. eine Siliziumnitridschicht (etwa mit einer Dicke von einigen 10 nm, z.B. 35 nm) erzeugt (z.B. aufgesputtert).

Die untere elektro-optisch aktive Schicht 250a steht in Kontakt mit dem oberen Abschnitt 1112b (z.B. in Form eines Goldkontaktes) des Kontaktes 111b. Neben dem rechten Kontakt 111b wird auch ein Teil des linken Kontakts 111a hergestellt, nämlich sein die Durchgangsöffnung 131a durchgreifender erster Abschnitt 1111a und ein Teil 1113a des oberen Abschnitts 1111a.

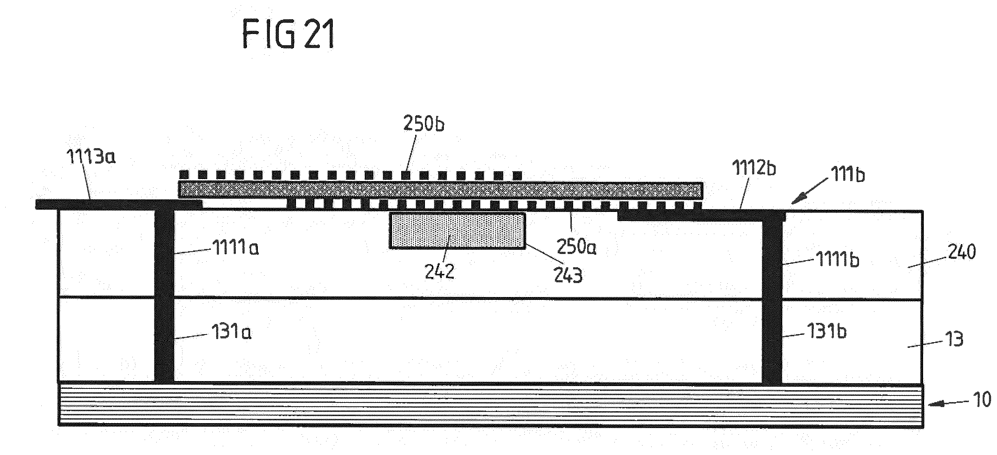

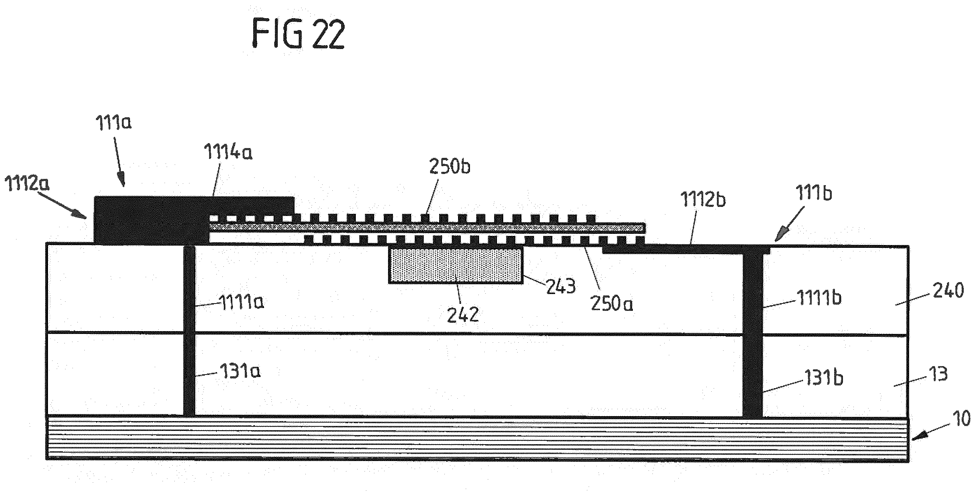

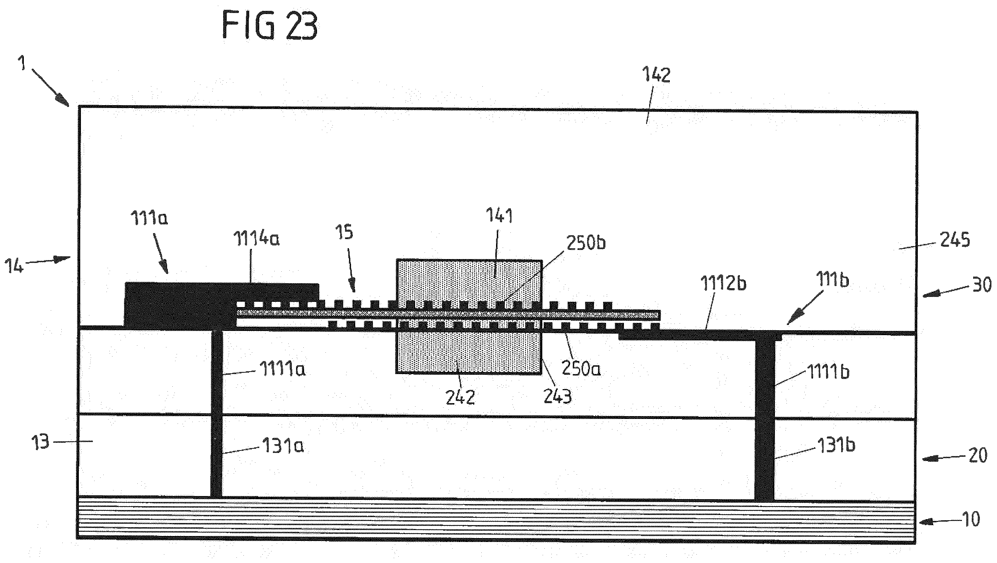

Nach Anordnen der dielektrischen Schicht 251 wird eine zweite, obere elektro-optisch aktive Schicht 250b erzeugt, die zumindest abschnittsweise auf der dielektrischen Schicht 251 angeordnet ist (Fig. 21). Die elektro-optisch aktiven Schichten 250a, 250b bestehen insbesondere jeweils aus einem zweidimensionalen Material (z.B. Graphen), wobei auch mehr als zwei dieser Schichten vorgesehen sein können. Nach Herstellen der oberen aktiven Schicht 250b wird ein weiterer Teil 1114a des Kontaktes 111a erzeugt, um den oberen Kontaktabschnitt 1112a des Kontaktes 111a zu vervollständigen (Fig. 22). Der Teil 1114a des Kontaktes 111a kontaktiert einen Abschnitt der oberen aktiven Schicht 250b, so dass ein elektro-optisch aktives Element ähnlich demjenigen der Fig. 9 entsteht. Abschließend wird die obere Polymer-Mantelschicht 245 erzeugt, wie in Fig. 23 gezeigt.

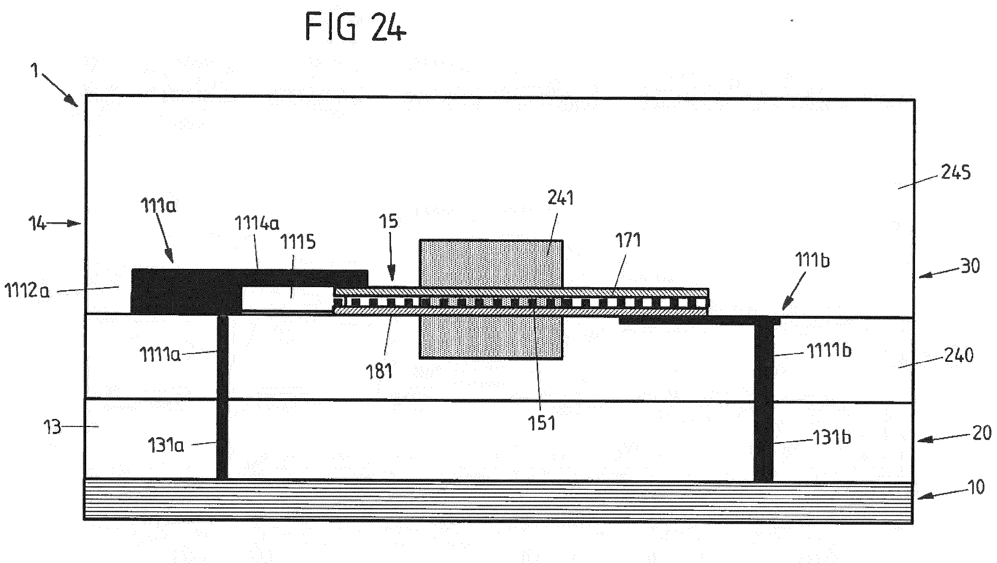

Denkbar ist auch, dass das elektro-optisch aktive Element nicht aus Schichten aus einem zweidimensionalen Material aufgebaut wird, sondern aus Halbleiterschichten, z.B. ähnlich dem elektro-optischen Element der Fig. 7. Die Herstellung der Leiterplatte bzw. des entsprechenden Leiterplattenabschnitts erfolgt analog zu den Fig. 19 bis 22. Die fertige Struktur ist in Fig. 24 gezeigt, wonach der Teilabschnitt 1114a der Kontaktes 111a mit einer Isolierung 1115 (z.B. aus Siliziumnitrid oder Siliziumoxid) insbesondere von der aktiven Schicht 151 getrennt ist.

Für die Ausbildung der aktiven Schicht 151 insbesondere im Wellenlängenbereich von 1 µm bis 1,6 µm können z.B. gitterangepasste InGaAs-Schichten auf InP-Substrat verwendet werden. Derartige Schichten werden z.B. per metallorganischer chemischer Gasphasenabscheidung (MOCVD) auf einem InP-Substrat aufgewachsen. Für die oben bereits erwähnte Epitaxie-Lift-Off Technik (ELO-Technik), wird zunächst eine dünne Opferschicht aus einem selektiv leicht ätzbaren Material (z.B. AlAs) gewachsen. Danach wird eine dünne Schicht (z.B. mit einer Dicke zwischen 100 nm - 200 nm) des aktiven Materials - z.B. InGaAs - epitaktisch gewachsen, wobei zur Erzielung der gewünschten Baulementfunktion auch Dotierungen möglich sind. Für besonders schnelle Fotoleiter-Detektoren können Eisenatome als Rekombinationszentren eingebaut werden. Für die Ausbildung von leitfähigen Oberflächen und p-n-Übergängen kann z.B. eine Abfolge Zn-Dotierung - undotiert - S-Dotierung erfolgen, wobei die Dotierung auch in Randschichten aus InP gelegt werden kann (InP:n/InGaAs/InP:p Heterostruktur).

Nach dem epitaktischen Wachstum wird der (insbesondere flexible) Träger 251 (s. Fig. 13) aufgedampft; beispielsweise in Form einer Metallschicht (z.B. einer Goldschicht). Im letzten Schritt wird das Epitaxiesubstrat in eine für die Opferschicht selektive Ätzlösung getaucht und auf diese Weise die Halbleiterschicht und der Träger von dem (dicken) Epitaxiesubstrat getrennt.

Der obere Kontaktabschnitt (vgl. Kontakt 1112a in Fig. 24) muss ohne Kurzschluss mit dem untern Kontaktabschnitt (Abschnitt 1111a in Fig. 24) verbunden werden, weshalb die dielektrische Schicht 1115 als Isolator vorgesehen wird. In der Schicht 1115 können Öffnungen und über den seitlichen Abschnitten (Kontaktbereichen) der aktiven Schicht Fenster geöffnet werden, die dann durch Gold-Aufdampfen und Strukturierung geeignet miteinander verbunden werden. Von Vorteil kann es sein, wenn für einen Modulator und einen Detektor dieselbe aktive Schicht genutzt wird, d.h. nur ein ELO- und Transferierungsprozess erforderlich ist. So kann ein Elektroabsorptionsmodulator auch invers als Detektor genutzt werden, indem eine Spannung in Sperrrichtung angelegt wird; der Fotostrom folgt der optischen Modulation mit großer Geschwindigkeit.

Es wird angemerkt, dass bei der Realisierung eines Lichtabsorptionsmodulators mit Hilfe von mindestens zwei aus einem zweidimensionalen Material gebildeten Materialschichten (vgl. z.B. auch die Figuren 8 und 9) anstelle zweier Halbleiterschichten, ebenfalls eine Verbindung der oberen Kontaktabschnitte mit den unteren Kontaktabschnitte ohne Kurzschluss ermöglicht werden muss. Dies kann analog zur Realisierung des Lichtabsorptionsmodulators mit Halbleiterschichten erfolgen, d.h. durch Anordnen einer isolierenden Schicht ähnlich der Schicht 1115 in Fig. 24.

Analog zum Halbleiter-Modulator können auch beim Modulator, der aus einem zweidimensionalen Material gebildete aktive Materialschichten aufweist, die aktiven Schichten parallel geschaltet werden, um einen Fotoleiter- Detektor zu realisieren. Denkbar ist insbesondere, dass dieselben aktiven Schichten verwendet werden, um sowohl einen Lichtabsorptionsmodulator als auch einen Lichtdetektor zu realisieren. Beispielsweise grenzt in diesem Fall der Lichtdetektor an den Lichtabsorptionsmodulator an.

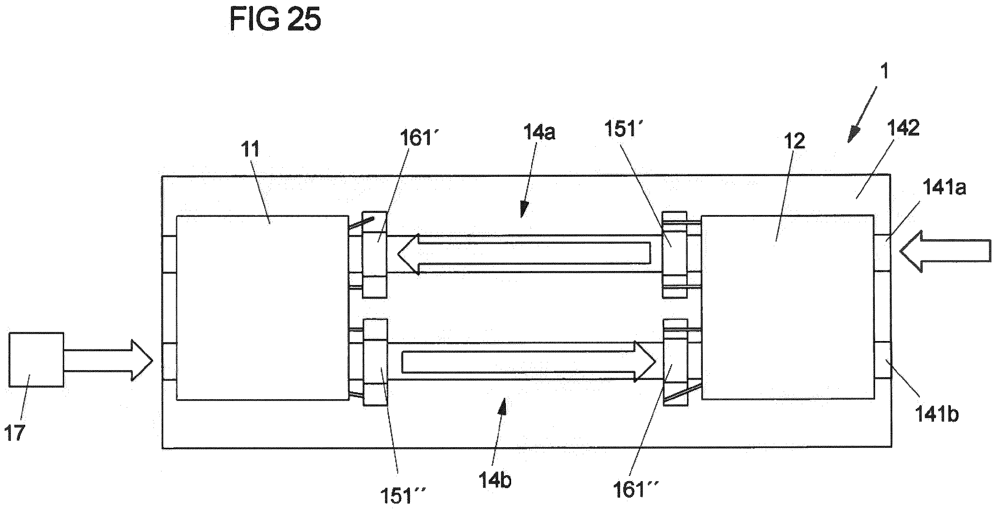

Fig. 25 zeigt eine weitere Ausführungsform der erfindungsgemäßen Schaltkreisanordnung wiederum in Form einer Leiterplatte, wobei zwei optische Wellenleiter 14a, 14b vorhanden sind, um eine optische Kommunikationsverbindung zwischen zwei ICs 11, 12 herzustellen. In die optischen Wellenleiter 14a, 14b sind jeweils elektro-optisch aktive Materialschichten 151', 151" (Modulatoren bzw. Bestandteile von Modulatoren) und 161',161" (Detektoren bzw. Bestandteile von Detektoren) integriert, wobei die elektro-optisch aktiven Materialschichten 151', 151", 161',161" angrenzend an einen Kern 141a, 141b des jeweiligen Wellenleiters 14a, 14b angeordnet sind oder sich zumindest teilweise innerhalb des Kerns 141a, 141b erstrecken.

Es wird darauf hingewiesen, dass Elemente der vorstehend beschriebenen Ausführungsbeispiele natürlich auch in Kombination miteinander verwendet werden können. So können z.B. natürlich in den Varianten der Fig. 1 bis 11 analog zu Fig. 25 mehrere optische Wellenleiter und somit mehrere Kommunikationswege zwischen den ICs 11 und 12 realisiert sein.

## Patentansprüche

1. Schaltkreisanordnung, mit
- mindestens einem ersten und einem zweiten elektronischen Schaltkreis (11, 12);
- mindestens einem optischen Wellenleiter (14, 14a, 14b), wobei der Kern (141, 141a, 141b) und der Mantel (142) des optischen Wellenleiters (14, 14a, 14b) aus einem amorphen Material gebildet sind;
- mindestens einem Träger (13), an dem der mindestens eine optische Wellenleiter (14, 14a, 14b) angeordnet ist; und
- mindestens einer ersten, mit dem ersten elektronischen Schaltkreis (11) elektrisch verbundenen elektro-optisch aktiven Materialschicht (151, 151', 151", 151a, 151b), die ausgebildet ist, ein über einen ersten elektrischen Kontakt (111a, 111b) von dem ersten elektronischen Schaltkreis (11) empfangenes elektrisches Signal in ein sich in dem mindestens einen optischen Wellenleiter (14, 14a, 14b) ausbreitendes optisches Signal umzusetzen und mindestens einer zweiten, mit dem zweiten elektronischen Schaltkreis (12) elektrisch verbundenen elektro-optisch aktiven Materialschicht (161, 161', 161"), die ausgebildet ist, ein von der ersten elektro-optisch aktiven Materialschicht (151, 151', 151", 151a, 151b) erzeugtes und sich in dem mindestens einen optischen Wellenleiter (14, 14a, 14b) ausbreitendes optisches Signal in ein über einen zweiten elektrischen Kontakt (121a, 121b) zu dem zweiten elektronischen Schaltkreis (12) leitbares elektrisches Signal umzusetzen, wobei
- die elektrischen Verbindungen zwischen den elektronischen Schaltkreisen (11, 12) und den elektro-optisch aktiven Materialschichten (151, 151', 151",151a, 151b, 161, 161', 161") dadurch hergestellt sind, dass die elektrischen Kontakte (111a, 111b, 121a, 121b) jeweils von den elektronischen Schaltkreisen (11, 12) durch zumindest einen Abschnitt des Mantels (142) des mindestens einen optischen Wellenleiters (14, 14a, 14b) hindurch bis zu den elektro-optisch aktiven Materialschichten (151, 151', 151",151a, 151b, 161, 161', 161") verlaufen oder mit einem Abschnitt der elektro-optisch aktiven Materialschichten (151, 151', 151",151a, 151b, 161, 161', 161") verbunden sind, der aus dem Mantel (142) des mindestens einen optischen Wellenleiters (14, 14a, 14b) herausragt, und
- die elektronischen Schaltkreise (11, 12) an dem mindestens einen Träger (13) angeordnet sind, und wobei
- die elektronischen Schaltkreise (11, 12) auf einer Seite des Trägers (13) und der mindestens eine optische Wellenleiter (14, 14a, 14b) auf der anderen Seite des mindestens einen Trägers (13) angeordnet sind, wobei
- sich die elektro-optisch aktiven Materialschichten (151, 151', 151",151a, 151b, 161,161', 161") zumindest teilweise in dem mindestens einen optischen Wellenleiter (14, 14a, 14b) erstrecken,
**dadurch gekennzeichnet, dass**
sich die elektro-optisch aktiven Materialschichten (151, 151', 151",151a, 151b, 161, 161', 161") zumindest teilweise in dem Kern (141, 141a, 141b) des mindestens einen optischen Wellenleiters (14, 14a, 14b) erstrecken oder an der dem Träger (13) zugewandten Seite des Kerns (141, 141a, 141b) des mindestens einen optischen Wellenleiters (14, 14a, 14b) angrenzend erstrecken.

2. Schaltkreisanordnung nach Anspruch 1, **dadurch gekennzeichnet, dass** es sich bei der Schaltkreisanordnung um eine Leiterplatte (1) oder einen Mikrochip handelt.

3. Schaltkreisanordnung nach einem der vorhergehenden Ansprüche, **dadurch gekennzeichnet, dass** der Mantel (142) und/oder der Kern (141, 141a, 141b) des mindestens einen optischen Wellenleiters (14, 14a, 14b) aus einem elektrisch isolierenden Material ausgebildet sind.

4. Schaltkreisanordnung nach einem der vorhergehenden Ansprüche, **dadurch gekennzeichnet, dass** der mindestens eine optische Wellenleiter (14, 14a, 14b) zumindest teilweise aus einem Material gebildet ist, das aus der flüssigen Phase oder der Gasphase an dem Träger (13) erzeugt wurde, und / oder zumindest teilweise aus einem Polymermaterial, Siliziumdioxid und/oder Siliziumnitrid gebildet ist.

5. Schaltkreisanordnung nach einem der vorhergehenden Ansprüche, **dadurch gekennzeichnet, dass** sich die elektrischen Kontakte (111a, 111b, 121a, 121b) insbesondere durch eine Durchgangsöffnung (131a, 131b, 132a, 132b) in dem Träger (13) hindurch erstrecken.

6. Schaltkreisanordnung nach einem der vorhergehenden Ansprüche, **dadurch gekennzeichnet, dass** sich der mindestens eine optische Wellenleiter (14, 14a, 14b) zwischen zwei Trägern (13, 130) erstreckt.

7. Schaltkreisanordnung nach einem der vorhergehenden Ansprüche, **dadurch gekennzeichnet, dass** die elektro-optisch aktive Materialschichten (151, 151', 151",151a, 151b, 161, 161', 161") aus einem anderen Material als der mindestens eine optische Wellenleiter (14, 14a, 14b) ausgebildet sind, und / oder dass die elektro-optisch aktiven Materialschichten (151, 151', 151",151a, 151b, 161, 161', 161") aus einem kristallinen Material gebildet sind.

8. Schaltkreisanordnung nach einem der vorhergehenden Ansprüche, **dadurch gekennzeichnet, dass** die elektro-optisch aktiven Materialschichten (151, 151', 151",151a, 151b, 161, 161', 161") ein zweidimensionales Material oder ein Halbleitermaterial aufweisen oder aus einem derartigen Material gebildet sind.

9. Schaltkreisanordnung nach Anspruch 8, **dadurch gekennzeichnet, dass** das zweidimensionale Material aus Graphen, triazinbasiertem graphitischem Kohlenstoffnitrid, Germanen, Molybdändisulfid, Molybdändiselenid, Silicen und/oder schwarzem Phosphor gebildet ist oder zumindest eines dieser Materialien aufweist.

10. Schaltkreisanordnung nach Anspruch 8, **dadurch gekennzeichnet, dass** es sich bei dem Halbleitermaterial um ein III-V Halbleitermaterial handelt.

11. Schaltkreisanordnung nach einem der vorhergehenden Ansprüche, **dadurch gekennzeichnet, dass** der Kern (141, 141a, 141b) des mindestens einen optischen Wellenleiters (14, 14a, 14b) einen Querschnitt von mindestens 1 µm² oder von mindestens 5 µm² aufweist und/oder die elektro-optisch aktiven Materialschichten (151, 151a, 151b, 161) eine Dicke von höchstens 500 nm oder höchstens 200 nm oder höchstens 50 nm besitzen.

12. Schaltkreisanordnung nach einem der vorhergehenden Ansprüche, **dadurch gekennzeichnet, dass** die erste elektro-optisch aktive Materialschicht (151, 151', 151",151a, 151b) oder eine Mehrfach-Schichtstruktur mit der ersten elektro-optisch aktiven Materialschicht einen Modulator zum Modulieren einer in dem mindestens einen optischen Wellenleiter (14, 14a, 14b) geführten optischen Welle, die von einer zu dem mindestens einen optischen Wellenleiter (14, 14a, 14b) separaten externen Lichtquelle (17) erzeugt wird, ausbildet oder Teil eines derartigen Modulators ist, und/oder die zweite elektro-optisch aktive Materialschicht (161, 161', 161") einen Lichtdetektor ausbildet oder Teil eines Lichtdetektors ist.

13. Verfahren zum Herstellen einer Schaltkreisanordnung nach einem der vorhergehenden Ansprüche, mit den Schritten:
- Bereitstellen eines Trägers (13);
- Anordnen einer amorphen Materialschicht (240) an dem Träger (13), die einen Abschnitt eines Mantels eines optischen Wellenleiters (14) ausbildet;
- Anordnen mindestens einer elektro-optisch aktiven Schicht (250) an der Materialschicht (240);
- Erzeugen eines elektrischen Kontakts (111a, 111b), der sich zumindest teilweise durch die amorphe Materialschicht (240) hindurch oder an der amorphen Materialschicht (240) vorbei bis zu der elektro-optisch aktiven Schicht (250) erstreckt,
**dadurch gekennzeichnet, dass**
in der amorphen Materialschicht (240) eine Aussparung (243) erzeugt und die Aussparung (243) vor dem Anordnen der elektro-optisch aktiven Schicht (250) mit einem Kernmaterial (242) befüllt wird, um einen ersten Abschnitt eines Kerns (141) des optischen Wellenleiters (14) zu erzeugen, wobei die elektro-optisch aktive Schicht (250) so an der amorphen Materialschicht (240) angeordnet wird, dass sie sich über das Kernmaterial (242) hinweg erstreckt,
auf einer dem ersten Abschnitt des Kerns (141) des optischen Wellenleiters (14) abgewandten Seite der elektro-optisch aktiven Schicht (250) ein zweiter Abschnitt des Kerns (141) des optischen Wellenleiters (14) erzeugt wird, und
nach dem Erzeugen des ersten und zweiten Abschnitts des Kerns (14) des optischen Wellenleiters (14) eine weitere Materialschicht (245) erzeugt wird, die einen weiteren Abschnitt des Mantels des optischen Wellenleiters (14) ausbildet.

14. Verfahren nach Anspruch 13, **dadurch gekennzeichnet, dass** sich die mindestens eine elektro-optisch aktive Schicht (250) vor dem Anordnen an der amorphen Materialschicht (240) auf einem von dem Träger (13) verschiedenen Trägermaterial befindet, das nach dem Anordnen der elektro-optisch aktiven Schicht (250) an der amorphen Materialschicht (240) entfernt wird, wobei die mindestens eine elektro-optisch aktive Schicht (250) insbesondere nach dem Entfernen des Trägermaterials strukturiert wird.

## Claims

1. A circuit assembly, comprising
- at least one first and one second electronic circuit (11, 12);
- at least one optical waveguide (14, 14a, 14b), wherein the core (141, 141a, 141b) and the cladding (142) of the optical waveguide (14, 14a, 14b) are formed from an amorphous material;
- at least one carrier (13) on which the at least one optical waveguide (14, 14a, 14b) is arranged; and
- at least one first electro-optically active material layer (151, 151', 151", 151a, 151b) electrically connected with the first electronic circuit (11), which is configured to convert an electrical signal received from the first electronic circuit (11) via a first electrical contact (111a, 111b) into an optical signal propagating in the at least one optical waveguide (14, 14a, 14b) and at least one second electro-optically active material layer (161, 161', 161") electrically connected with the second electronic circuit (12), which is configured to convert an optical signal generated by the first electro-optically active material layer (151, 151', 151", 151a, 151b) and propagating in the at least one optical waveguide (14, 14a, 14b) into an electrical signal to be conducted to the second electronic circuit (12) via a second electrical contact (121a, 121b), wherein
- the electrical connections between the electronic circuits (11, 12) and the electro-optically active material layers (151, 151', 151", 151a, 151b, 161, 161', 161") are produced in that the electrical contacts (111a, 111b, 121a, 121b) each extend from the electronic circuits (11, 12) through at least one section of the cladding (142) of the at least one optical waveguide (14, 14a, 14b) to the electro-optically active material layers (151, 151', 151", 151a, 151b, 161, 161', 161") or are connected to a section of the electro-optically active material layers (151, 151', 151", 151a, 151b, 161, 161', 161"), which protrudes from the cladding (142) of the at least one optical waveguide (14, 14a, 14b), and
- the electronic circuits (11, 12) are arranged on the at least one carrier (13), and wherein
- the electronic circuits (11, 12) are arranged on one side of the carrier (13) and the at least one optical waveguide (14, 14a, 14b) is arranged on the other side of the at least one carrier (13), wherein
- the electro-optically active material layers (151, 151', 151", 151a, 151b, 161, 161', 161") at least partly extend in the at least one optical waveguide (14, 14a, 14b),
**characterized in that**
the electro-optically active material layers (151, 151', 151", 151a, 151b, 161, 161', 161") at least partly extend in the core (141, 141a, 141b) of the at least one optical waveguide (14, 14a, 14b) or adjacently extend on the side of the core (141, 141a, 141b) of the at least one optical waveguide (14, 14a, 14b) facing the carrier (13).

2. The circuit assembly according to claim 1, **characterized in that** the circuit assembly is a circuit board (1) or a microchip.

3. The circuit assembly according to any of the preceding claims, **characterized in that** the cladding (142) and/or the core (141, 141a, 141b) of the at least one optical waveguide (14, 14a, 14b) are formed from an electrically insulating material.

4. The circuit assembly according to any of the preceding claims, **characterized in that** the at least one optical waveguide (14, 14a, 14b) is at least partly formed from a material which was produced on the carrier (13) from the liquid phase or the gas phase, and/or is at least partly formed from a polymer material, silicon dioxide and/or silicon nitride.

5. The circuit assembly according to any of the preceding claims, **characterized in that** the electrical contacts (111a, 111b, 121a, 121b) in particular extend through a through opening (131a, 131b, 132a, 132b) in the carrier (13).

6. The circuit assembly according to any of the preceding claims, **characterized in that** the at least one optical waveguide (14, 14a, 14b) extends between two carriers (13, 130).

7. The circuit assembly according to any of the preceding claims, **characterized in that** the electro-optically active material layers (151, 151', 151", 151a, 151b, 161, 161', 161") are formed from a different material than the at least one optical waveguide (14, 14a, 14b), and/or that the electro-optically active material layers (151, 151', 151", 151a, 151b, 161, 161', 161") are formed from a crystalline material.

8. The circuit assembly according to any of the preceding claims, **characterized in that** the electro-optically active material layers (151, 151', 151", 151a, 151b, 161, 161', 161") include a two-dimensional material or a semiconductor material or are formed from such a material.

9. The circuit assembly according to claim 8, **characterized in that** the two-dimensional material is formed from graphene, triazine-based graphitic carbon nitride, germanene, molybdenum disulfide, molybdenum diselenide, silicene and/or black phosphorus or includes at least one of these materials.

10. The circuit assembly according to claim 8, **characterized in that** the semiconductor material is a III-V semiconductor material.

11. The circuit assembly according to any of the preceding claims, **characterized in that** the core (141, 141a, 141b) of the at least one optical waveguide (14, 14a, 14b) has a cross-section of at least 1 µm² or of at least 5 µm² and/or the electro-optically active material layers (151, 151a, 151b, 161) have a thickness of not more than 500 nm or not more than 200 nm or not more than 50 nm.

12. The circuit assembly according to any of the preceding claims, **characterized in that** the first electro-optically active material layer (151, 151', 151", 151a, 151b) or a multiple layer structure with the first electro-optically active material layer forms a modulator for modulating an optical wave guided in the at least one optical waveguide (14, 14a, 14b), which is generated by an external light source (17) separate from the at least one optical waveguide (14, 14a, 14b) or is part of such a modulator, and/or the second electro-optically active material layer (161, 161', 161") forms a light detector or is part of a light detector.

13. A method for producing a circuit assembly according to any of the preceding claims, comprising the following steps:
- providing a carrier (13);
- arranging an amorphous material layer (240) on the carrier (13), which forms a section of a cladding of an optical waveguide (14);
- arranging at least one electro-optically active layer (250) on the material layer (240);
- producing an electrical contact (111a, 111b) which at least partly extends through the amorphous material layer (240) or past the amorphous material layer (240) up to the electro-optically active layer (250),
**characterized in that**
a cutout (243) is produced in the amorphous material layer (240) and the cutout (243) is filled with a core material (242) before arranging the electro-optically active layer (250) in order to produce a first section of a core (141) of the optical waveguide (14), wherein the electro-optically active layer (250) is arranged on the amorphous material layer (240) such that it extends across the core material (242),
on a side of the electro-optically active layer (250) facing away from the first section of the core (141) of the optical waveguide (14) a second section of the core (141) of the optical waveguide (14) is produced, and
after producing the first and the second section of the core (14) of the optical waveguide (14) a further material layer (245) is produced, which forms a further section of the cladding of the optical waveguide (14).

14. The method according to claim 13, **characterized in that** before being arranged on the amorphous material layer (240) the at least one electro-optically active layer (250) is disposed on a carrier material different from the carrier (13), which is removed after arranging the electro-optically active layer (250) on the amorphous material layer (240), wherein the at least one electro-optically active layer (250) is structured in particular after removing the carrier material.

## Revendications

1. Ensemble circuit de commutation, comprenant
- au moins un premier et un deuxième circuit électronique (11, 12) ;
- au moins un guide d'onde optique (14, 14a, 14b), le noyau (141, 141a, 141b) et la gaine (142) du guide d'onde optique (14, 14a, 14b) étant formés d'un matériau amorphe ;
- au moins un support (13) sur lequel est agencé le au moins un guide d'onde optique (14, 14a, 14b) ; et
- au moins une première couche de matériau électro-optiquement actif (151, 151', 151", 151a, 151b) connectée électriquement au premier circuit électronique (11) et conçue pour convertir un signal électrique reçu du premier circuit électronique (11) par l'intermédiaire d'un premier contact électrique (111a, 111b) en un signal optique se propageant dans le au moins un guide d'onde optique (14, 14a, 14b), et au moins une deuxième couche de matériau électro-optiquement actif (161, 161', 161") connectée électriquement au deuxième circuit électronique (12), qui est conçue pour convertir un signal optique généré par la première couche de matériau électro-optiquement actif (151, 151', 151", 151a, 151b) et se propageant dans le au moins un guide d'onde optique (14, 14a, 14b) en un signal électrique pouvant être conduit au deuxième circuit électronique (12) par l'intermédiaire d'un deuxième contact électrique (121a, 121b), dans lequel
- les connexions électriques entre les circuits électroniques (11, 12) et les couches de matériau électro-optiquement actif (151, 151', 151", 151a, 151b, 161, 161', 161") sont établies en ce que les contacts électriques (111a, 111b, 121a, 121b) s'étendent respectivement depuis les circuits électroniques (11, 12) à travers au moins une partie de la gaine (142) du au moins un guide d'onde optique (14, 14a, 14b) à travers les couches de matériau électro-optiquement actif (151, 151', 151", 151a, 151b, 161, 161', 161") ou sont connectées à une partie des couches de matériau électro-optiquement actif (151, 151', 151", 151a, 151b, 161, 161', 161") qui dépasse de la gaine (142) du au moins un guide d'onde optique (14, 14a, 14b), et
- les circuits électroniques (11, 12) sont agencés sur le au moins un support (13), et dans lequel
- les circuits électroniques (11, 12) sont agencés sur un côté du support (13) et le au moins un guide d'onde optique (14, 14a, 14b) est agencé sur l'autre côté du au moins un support (13), dans lequel
- les couches de matériau électro-optiquement actif (151, 151', 151", 151a, 151b, 161, 161', 161") s'étendent au moins partiellement dans le au moins un guide d'onde optique (14, 14a, 14b),
**caractérisé en ce que**
les couches de matériau électro-optiquement actif (151, 151', 151", 151a, 151b, 161, 161', 161") s'étendent au moins partiellement dans le noyau (141, 141a, 141b) du au moins un guide d'onde optique (14, 14a, 14b) ou s'étendent de manière adjacente sur le côté du noyau (141, 141a, 141b) du au moins un guide d'onde optique (14, 14a, 14b) faisant face au support (13).

2. Ensemble circuit de commutation selon la revendication 1, **caractérisé en ce que** l'ensemble circuit de commutation est un circuit imprimé (1) ou une micropuce.

3. Ensemble circuit de commutation selon l'une quelconque des revendications précédentes, **caractérisé en ce que** la gaine (142) et/ou le noyau (141, 141a, 141b) de l'au moins un guide d'onde optique (14, 14a, 14b) sont formés d'un matériau électriquement isolant.

4. Ensemble circuit de commutation selon l'une quelconque des revendications précédentes, **caractérisé en ce que** le au moins un guide d'onde optique (14, 14a, 14b) est formé au moins partiellement d'un matériau généré à partir de la phase liquide ou de la phase gazeuse sur le support (13) et/ou est formé au moins partiellement d'un matériau polymère, de dioxyde de silicium et/ou de nitrure de silicium.

5. Ensemble circuit de commutation selon l'une quelconque des revendications précédentes, **caractérisé en ce que** les contacts électriques (111a, 111b, 121a, 121b) s'étendent en particulier à travers une ouverture de passage (131a, 131b, 132a, 132b) dans le support (13).

6. Ensemble circuit de commutation selon l'une quelconque des revendications précédentes, **caractérisé en ce que** le au moins un guide d'onde optique (14, 14a, 14b) s'étend entre deux supports (13, 130).

7. Ensemble circuit de commutation selon l'une quelconque des revendications précédentes, **caractérisé en ce que** les couches de matériau électro-optiquement actif (151, 151', 151", 151a, 151b, 161, 161', 161") sont formées d'un matériau différent de celui du au moins un guide d'onde optique (14, 14a, 14b), et/ou **en ce que** les couches de matériau électro-optiquement actif (151, 151', 151", 151a, 151b, 161, 161', 161") sont formées d'un matériau cristallin.

8. Ensemble circuit de commutation selon l'une quelconque des revendications précédentes, **caractérisé en ce que** les couches de matériau électro-optiquement actif (151, 151', 151", 151a, 151b, 161, 161', 161") comprennent un matériau bidimensionnel ou un matériau semi-conducteur ou sont formées d'un tel matériau.

9. Ensemble circuit de commutation selon la revendication 8, **caractérisé en ce que** le matériau bidimensionnel est formé de graphène, de nitrure de carbone graphitique à base de triazine, de germanène, de disulfure de molybdène, de diséléniure de molybdène, de silice et/ou de phosphore noir, ou comprend au moins un de ces matériaux.

10. Ensemble circuit de commutation selon la revendication 8, **caractérisé en ce que** le matériau semi-conducteur est un matériau semi-conducteur III-V.

11. Ensemble circuit de commutation selon l'une quelconque des revendications précédentes, **caractérisé en ce que** le noyau (141, 141a, 141b) du au moins un guide d'onde optique (14, 14a, 14b) a une section transversale d'au moins 1 µm² ou d'au moins 5 µm² et/ou les couches de matériau électro-optiquement actif (151, 151a, 151b, 161) ont une épaisseur d'au plus 500 nm ou d'au plus 200 nm ou d'au plus 50 nm.

12. Ensemble circuit de commutation selon l'une quelconque des revendications précédentes, **caractérisé en ce que** la première couche de matériau électro-optiquement actif (151, 151', 151", 151a, 151b) ou une structure multicouche comprenant la première couche de matériau électro-optiquement actif forme un modulateur pour moduler une onde optique guidée dans le au moins un guide d'onde optique (14, 14a, 14b), qui est générée par une source de lumière externe (17) séparée dudit au moins un guide d'onde optique (14, 14a, 14b), ou fait partie d'un tel modulateur, et/ou la deuxième couche de matériau électro-optiquement actif (161, 161', 161") forme un détecteur de lumière ou fait partie d'un détecteur de lumière.

13. Procédé de fabrication d'un ensemble circuit de commutation selon l'une quelconque des revendications précédentes, comportant les étapes suivantes :
- fournir un support (13) ;
- agencer sur le support (13) une couche de matériau amorphe (240) formant une partie d'une gaine d'un guide d'onde optique (14) ;
- agencer au moins une couche électro-optiquement active (250) sur la couche de matériau (240) ;
- produire un contact électrique (111a, 111b) qui s'étend au moins partiellement à travers la couche de matériau amorphe (240) ou au-delà de la couche de matériau amorphe (240) jusqu'à la couche électro-optiquement active (250),
**caractérisé en ce que**
un évidement (243) est produit dans la couche de matériau amorphe (240) et l'évidement (243) est rempli d'un matériau de noyau (242) avant d'agencer la couche électro-optiquement active (250) pour produire une première partie d'un noyau (141) du guide d'onde optique (14), la couche électro-optiquement active (250) étant agencée sur la couche de matériau amorphe (240) de manière à s'étendre au-delà du matériau de noyau (242),
sur un côté de la couche électro-optiquement active (250) opposé à la première partie du noyau (141) du guide d'onde optique (14), une deuxième partie du noyau (141) du guide d'onde optique (14) est produite, et
après avoir produit les première et deuxième parties du noyau (14) du guide d'onde optique (14), une autre couche de matériau (245) est produite, qui forme une autre partie de la gaine du guide d'onde optique (14).

14. Procédé selon la revendication 13, **caractérisé en ce que** la au moins une couche électro-optiquement active (250) se trouve, avant d'être agencée sur la couche de matériau amorphe (240), sur un matériau de support différent du support (13), qui est enlevé après que la couche électro-optiquement active (250) a été agencée sur la couche de matériau amorphe (240), la au moins une couche électro-optiquement active (250) étant structurée en particulier après l'enlèvement du matériau de support.
